# EUROPEAN PATENT APPLICATION

(11) **EP 4 492 520 A1**
(43) Date of publication of application: **15.01.2025**
(21) Application number: 24187862.8
(22) Date of filing: 10.07.2024
(51) Int. Cl.: H01M 10/04, H01M 10/0587, H01M 50/533, H01M 50/538, H01M 10/0525

(54) **BATTERY CELL AND ELECTRIC DEVICE**

(30) Priority: 10.07.2023 CN 202310835168
(71) Applicant: Ningde Amperex Technology Ltd., Ningde City, Fujian 352100 (CN)
(72) Inventor: LIU, Ning, Ningde City, Fujian Province, People s Republic of China, 352100 (CN); LV, Fang, Ningde City, Fujian Province, People s Republic of China, 352100 (CN); YANG, Jianhui, Ningde City, Fujian Province, People s Republic of China, 352100 (CN); LI, Chenchen, Ningde City, Fujian Province, People s Republic of China, 352100 (CN)
(74) Representative: Icosa

(57) **Abstract**

This application provides a battery cell (100) and an electric device. An electrode assembly (10) of the battery cell (100) includes a first electrode plate (13) and a first tab (14). The first tab (14) is electrically connected to the first electrode plate (13). The first tab (14) is located in a straight region (11). The first tab (14) at least partially protrudes from a surface of the first electrode plate (13) in a second direction (Y). The first electrode plate (13) includes a first winding terminating section (131) located in the straight region (11) and a first bending section (132) located in a bending region (12). One end of the first winding terminating section (131) is connected to the first bending section (132), and another end of the first winding terminating section (131) is a first winding terminating end (133) of the first electrode plate (13). When viewed in the second direction (Y), the first tab (14) and the first winding terminating section (131) do not overlap. The first tab (14) can utilize the space, in the straight region (11), on a side of the first winding terminating section (131) facing away from the first bending section (132). This can alleviate the problem of increased thickness of the electrode assembly (10) in the second direction (Y) at a position corresponding to the first tab (14) caused by the first tab (14) and the problem of lithium precipitation due to uneven local stresses on the electrode plate, thereby improving the volumetric energy density and safety performance of the battery cell (100).

## Description

### TECHNICAL FIELD

This application relates to the field of battery technologies and specifically to a battery cell and an electric device.

### BACKGROUND

Battery cells have been widely used in fields such as portable electronic devices, electric transportation tools, electric tools, drones, and energy storage devices. With the development of the commercialization of battery cells, market demands for the energy density of battery cells are increasing. Therefore, how the energy density of battery cells is improved has become an urgent problem to be solved in the field of battery technologies.

### SUMMARY

Some embodiments of this application provide a battery cell and an electric device, so as to increase energy density of the battery cell.

According to a first aspect, an embodiment of this application provides a battery cell. The battery cell includes an electrode assembly, where the electrode assembly is a wound structure, the electrode assembly includes a straight region and a bending region, and in a first direction, at least one end of the straight region is connected to the bending region; and the electrode assembly includes a first electrode plate and a first tab, where the first tab is electrically connected to the first electrode plate, the first tab is located in the straight region, the first tab at least partially protrudes from a surface of the first electrode plate in a second direction, the first electrode plate includes a first winding terminating section located in the straight region and a first bending section located in the bending region, one end of the first winding terminating section is connected to the first bending section, and another end of the first winding terminating section is a first winding terminating end of the first electrode plate; where when viewed in the second direction, the first tab and the first winding terminating section do not overlap, and an extension direction of a winding axis of the electrode assembly, the first direction, and the second direction are perpendicular to each other.

In the above technical solution, the first tab is located in the straight region, and the first tab at least partially protrudes from the surface of the first electrode plate in the second direction. When viewed in the second direction, the first tab and the first winding terminating section do not overlap. Then the first tab can utilize the space, in the straight region, on a side of the first winding terminating section facing away from the first bending section. This can alleviate the problem of increased thickness of the electrode assembly in the second direction at a position corresponding to the first tab caused by the first tab protruding from the surface of the first electrode plate in the straight region, thereby increasing the volumetric energy density of the battery cell. When viewed in the second direction, the first tab and the first winding terminating section do not overlap, which can also reduce a thickness difference between the position of the electrode assembly corresponding to the first tab and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments, the first electrode plate is a positive electrode plate, and the first tab is a positive electrode tab.

In the above technical solution, the first electrode plate is a positive electrode plate, and the first tab is a positive electrode tab. Then the positive electrode tab is located in the straight region, and the positive electrode tab protrudes from a surface of the positive electrode plate in the second direction. The positive electrode tab is located in the straight region, and the positive electrode tab at least partially protrudes from the surface of the positive electrode plate in the second direction. When viewed in the second direction, the positive electrode tab and a winding terminating section of the positive electrode plate do not overlap. Then the positive electrode tab can utilize the space, in the straight region, on a side of the winding terminating section, of the positive electrode plate, facing away from the first bending section. This can alleviate the problem of increased thickness of the electrode assembly in the second direction at a position corresponding to the positive electrode tab caused by the positive electrode tab protruding from the surface of the positive electrode plate in the straight region, thereby increasing the volumetric energy density of the battery cell. When viewed in the second direction, the positive electrode tab and the winding terminating section of the positive electrode plate do not overlap, which can also reduce a thickness difference between the position of the electrode assembly corresponding to the positive electrode tab and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the first electrode plate includes a positive electrode current collector and a first positive electrode active substance layer, the first positive electrode active substance layer is disposed on a side of the positive electrode current collector in a thickness direction, and the first tab is connected to a surface of the first positive electrode active substance layer facing away from the positive electrode current collector and is electrically connected to the positive electrode current collector.

In the above technical solution, when the first electrode plate is a positive electrode plate, the first tab is connected to the surface of the first positive electrode active substance layer facing away from the positive electrode current collector. This facilitates more convenient connection between the first electrode plate and the first tab and also eliminates the need to reserve a mounting recess on the first electrode plate for mounting the first tab during manufacturing of the first electrode plate, thereby improving the production efficiency of the first electrode plate and avoiding the loss of the amount of active substance of the first electrode plate, conducive to increasing the energy density of the battery cell.

In some embodiments of the first aspect of this application, the first winding terminating section and the first bending section are connected at a first connection position, and when viewed in the second direction, the first winding terminating section is located between the first connection position and the first tab in the first direction.

In the above technical solution, when viewed in the second direction, the first winding terminating section is located between the first connection position and the first tab in the first direction. This eliminates the need to create recess or hole at the first winding terminating section to avoid the first tab, conducive to simplifying the production process of the first electrode plate and improving the production efficiency. Since there is no need to create recess or hole at the first winding terminating section to avoid the first tab, the loss of the amount of active substance of the first electrode plate at the first winding terminating section can be avoided, conducive to increasing the energy density of the battery cell or reducing the risk of lithium precipitation in the battery cell.

In some embodiments of the first aspect of this application, the electrode assembly further includes a second electrode plate with a polarity opposite to a polarity of the first electrode plate, and in the second direction, the first tab is located between the first electrode plate and the second electrode plate.

In the above technical solution, in the second direction, the first tab is located between the first electrode plate and the second electrode plate, facilitating good current flow capability of the positive electrode tab.

In some embodiments of the first aspect of this application, the first electrode plate further has a first winding starting end, and in a winding direction of the electrode assembly, length of the first electrode plate is L₁, and a largest distance between the first winding starting end and the first tab is L₂, satisfying L₁/4 ≤ L₂ ≤ 3L₁/4.

In the above technical solution, L₁/4 ≤ L₂ ≤ 3L₁/4, so that the first tab can be located in the straight region, and the first tab can be connected to a middle ring of the first electrode plate, facilitating good current flow capability of the first tab.

In some embodiments of the first aspect of this application, the first electrode plate is a positive electrode plate, and the electrode assembly further includes a second electrode plate, where the second electrode plate is a negative electrode plate, the second electrode plate includes a second winding terminating section located in the straight region and a second bending section located in the bending region, one end of the second winding terminating section is connected to the second bending section, another end of the second winding terminating section is a second winding terminating end of the second electrode plate, the second winding terminating section is located on an outer side of the first winding terminating section, and in a winding direction of the electrode assembly, the second winding terminating section exceeds the first winding terminating section; and when viewed in the second direction, the first tab and the second winding terminating section do not overlap.

In the above technical solution, in the winding direction of the electrode assembly, the second winding terminating section exceeds the first winding terminating section, allowing for more space on the side of the second winding terminating section facing away from the second bending section in the straight region of the electrode assembly. When viewed in the second direction, the first tab and the second winding terminating section do not overlap, which can further alleviate the problem of increased thickness of the electrode assembly in the second direction at the position corresponding to the first tab caused by the first tab protruding from the surface of the first electrode plate in the straight region, thereby increasing the volumetric energy density of the battery cell. When viewed in the second direction, the first tab and the second winding terminating section do not overlap, which can also reduce a thickness difference between the position of the electrode assembly corresponding to the first tab and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the second winding terminating section and the second bending section are connected at a second connection position, and when viewed in the second direction, the second winding terminating section is located between the second connection position and the first tab in the first direction.

In the above technical solution, when viewed in the second direction, the second winding terminating section is located between the second connection position and the first tab in the first direction. This eliminates the need to create recess or hole at the second winding terminating section to avoid the first tab, conducive to simplifying the production process of the second electrode plate and improving the production efficiency. Since there is no need to create recess or hole at the second winding terminating section to avoid the first tab, the loss of the amount of negative electrode active substance at the second winding terminating section can be avoided, conducive to reducing the risk of lithium precipitation in the battery cell and improving the safety performance of the battery cell.

In some embodiments of the first aspect of this application, the battery cell further includes a first protection member, and the first protection member covers a surface of the first tab.

In the above technical solution, the first protection member covers the surface of the first tab, reducing the risk of burrs on the surface of the first tab piercing the separator, thereby conducive to reducing the risk of short circuit in the battery cell and improving the safety performance of the battery cell.

In some embodiments of the first aspect of this application, when viewed in the second direction, the first protection member and the first winding terminating section do not overlap.

In the above technical solution, when viewed in the second direction, the first protection member and the first winding terminating section do not overlap. Then the first protection member can utilize the space, in the straight region, on the side of the first winding terminating section facing away from the first bending section. This can alleviate the problem of increased thickness of the electrode assembly in the second direction at the position corresponding to the first protection member due to provision of the first protection member, thereby increasing the volumetric energy density of the battery cell. When viewed in the second direction, the first protection member and the first winding terminating section do not overlap, which can also reduce a thickness difference between the position of the electrode assembly corresponding to the first protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the electrode assembly further includes a second electrode plate with a polarity opposite to a polarity of the first electrode plate, the first electrode plate is a positive electrode plate, the second electrode plate is a negative electrode plate, the second electrode plate includes a second winding terminating section located in the straight region and a second bending section located in the bending region, one end of the second winding terminating section is connected to the second bending section, another end of the second winding terminating section is a second winding terminating end of the second electrode plate, the second winding terminating section is located on an outer side of the first winding terminating section, and in a winding direction of the electrode assembly, the second winding terminating section exceeds the first winding terminating section; and when viewed in the second direction, the first protection member and the second winding terminating section do not overlap.

In the above technical solution, in the winding direction of the electrode assembly, the second winding terminating section exceeds the first winding terminating section, allowing for more space on the side of the second winding terminating section facing away from the second bending section in the straight region. When viewed in the second direction, the first protection member and the second winding terminating section do not overlap, which can further alleviate the problem of increased thickness of the electrode assembly in the second direction at the position corresponding to the first protection member due to provision of the first protection member, thereby increasing the volumetric energy density of the battery cell. When viewed in the second direction, the first protection member and the negative electrode winding terminating section do not overlap, which can also reduce a thickness difference between the position of the electrode assembly corresponding to the first protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the bending region includes a first bending region and a second bending region, and the first bending region and the second bending region are respectively connected to two ends of the straight region in the first direction; the first electrode plate has a first winding starting end, and the second electrode plate has a second winding starting end, where the first winding starting end, the first winding terminating end, and the second winding terminating end are all disposed facing the second bending region, the second winding starting end is disposed facing the first bending region, and the first winding starting end is closer to the second bending region than the second winding terminating end; and when viewed in the second direction, the first protection member and the first tab are located between the first winding starting end and the second winding terminating end.

In the above technical solution, when viewed in the second direction, the first protection member and the first tab are located between the first winding starting end and the second winding terminating end, and the first tab and the first protection member do not overlap with the first winding terminating section, which can also reduce the thickness differences between the positions of the electrode assembly corresponding to the first tab and the first protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, a largest distance between the first tab and the first winding starting end is W₄, and a smallest distance between the first tab and the first winding starting end is N₄, satisfying 2 mm ≤ W₄ - N₄ ≤ 20 mm.

In the above technical solution, if W₄ - N₄ ≤ 2 mm, the first tab is small in size, featuring weak current flow capability; and if W₄ - N₄ > 20 mm, the first tab is excessively large in size, so that the first tab occupies too much space in the first direction, requiring larger distance between the first winding starting end and the second winding terminating end in the first direction to ensure that the first tab and the second winding terminating section do not overlap when viewed in the second direction, not facilitating high energy density of the battery cell. Therefore, 2 mm ≤ W₄ - N₄ ≤ 20 mm, which ensures good current flow capability of the first tab and small distance between the first winding starting end and the second winding terminating end in the first direction, facilitating high energy density of the battery cell.

In some embodiments of the first aspect of this application, in the first direction, a largest distance between the first protection member and the first winding starting end is W₅, and a smallest distance between the first protection member and the first winding starting end is N₅, satisfying 3 mm ≤ W₅ - N₅ ≤ 23 mm.

In the above technical solution, if W₅ - N₅ < 3 mm, the first protection member is excessively small in size, with small coverage area for the first tab, making it difficult to reduce the risk of burrs on the surface of the first tab piercing the separator; and if W₅ - N₅ > 23 mm, the first protection member is excessively large in size, so that the first protection member occupies too much space in the first direction, requiring larger distance between the first winding starting end and the second winding terminating end in the first direction to ensure that the first protection member and the second winding terminating section do not overlap when viewed in the second direction, not facilitating high energy density of the battery cell. Therefore, 3 mm ≤ W₅ - N₅ ≤ 23 mm, which ensures large coverage area for the first tab by the first protection member, reducing the risk of burrs on the surface of the first tab piercing the separator, and ensures small distance between the first winding starting end and the second winding terminating end in the first direction, facilitating high energy density of the battery cell. In some embodiments of the first aspect of this application, 0.5 mm < N₅ < N₄.

In the above technical solution, that N₅ < N₄ ensures that the first protection member can cover a side of the first tab closest to the first winding starting end. This helps the first protection member to completely cover the first tab in the first direction, reducing the risk of burrs on the surface of the first tab piercing the separator, and improving the safety of the battery cell. That 0.5 mm < N₅ facilitates fixation of the first protection member to the first electrode plate.

In some embodiments of the first aspect of this application, (W₅ - N₅) > (W₄ - N₄).

In the above technical solution, (W₅ - N₅) > (W₄ - N₄), so that the first protection member can completely cover the first tab in the first direction, further reducing the risk of burrs on the surface of the first tab piercing the separator, and improving the safety of the battery cell.

In some embodiments of the first aspect of this application, the electrode assembly further includes a second electrode plate and a second tab, the second tab is electrically connected to the second electrode plate, the first electrode plate is a positive electrode plate, the second electrode plate is a negative electrode plate, and the second tab is located in the straight region; and when viewed in the second direction, the second tab and the first winding terminating section do not overlap.

In the above technical solution, when viewed in the second direction, the second tab and the first winding terminating section do not overlap. Then the second tab can utilize the space, in the straight region, on the side of the first winding terminating section facing away from the first bending section. This can alleviate the problem of increased thickness of the electrode assembly in the second direction at the position corresponding to the second tab due to provision of the second tab, thereby increasing the volumetric energy density of the battery cell. When viewed in the second direction, the second tab and the first winding terminating section do not overlap, which can also reduce a thickness difference between the position of the electrode assembly corresponding to the second tab and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the first winding terminating section and the first bending section are connected at a first connection position, and when viewed in the second direction, the first winding terminating section is located between the first connection position and the second tab in the first direction.

In the above technical solution, when viewed in the second direction, the first winding terminating section is located between the first connection position and the second tab in the first direction. This eliminates the need to create recess or hole at the first winding terminating section to avoid the second tab, conducive to simplifying the production process of the first electrode plate and improving the production efficiency. Since there is no need to create recess or hole at the first winding terminating section to avoid the second tab, the loss of the amount of positive electrode active substance at the first winding terminating section can be avoided, conducive to increasing the energy density of the battery cell.

In some embodiments of the first aspect of this application, in the second direction, the second tab is located between the first electrode plate and the second electrode plate. In the above technical solution, when viewed in the second direction, the second tab is located between the second electrode plate and the first electrode plate, facilitating good current flow capability of the second tab.

In some embodiments of the first aspect of this application, the second electrode plate further has a second winding starting end, and in a winding direction of the electrode assembly, length of the second electrode plate is Hi, and a largest distance between the second winding starting end and the second tab is H₂, satisfying H₁/4 ≤ H₂ ≤ 3H₁/4. In the above technical solution, H₁/4 ≤ H₂ ≤ 3H₁/4, so that the second tab can be located in the straight region, and the second tab can be connected to a middle ring of the second electrode plate, facilitating good current flow capability of the second tab. In some embodiments of the first aspect of this application, the second electrode plate includes a second winding terminating section located in the straight region and a second bending section located in the bending region, one end of the second winding terminating section is connected to the second bending section, another end of the second winding terminating section is a negative electrode winding terminating end of the second electrode plate, the second winding terminating section is located on an outer side of the first winding terminating section, and in a winding direction of the electrode assembly, the second winding terminating section exceeds the first winding terminating section; and when viewed in the second direction, the second tab and the second winding terminating section do not overlap.

In the above technical solution, in the winding direction of the electrode assembly, the second winding terminating section exceeds the first winding terminating section, allowing for more space on the side of the second winding terminating section facing away from the second bending section in the straight region of the electrode assembly. When viewed in the second direction, the second tab and the second winding terminating section do not overlap, which can further alleviate the problem of increased thickness of the electrode assembly in the second direction at the position corresponding to the second tab due to provision of the second tab, thereby increasing the volumetric energy density of the battery cell. When viewed in the second direction, the second tab and the second winding terminating section do not overlap, which can also reduce a thickness difference between the position of the electrode assembly corresponding to the second tab and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the second winding terminating section and the second bending section are connected at a second connection position, and when viewed in the second direction, the second winding terminating section is located between the second connection position and the second tab in the first direction.

In the above technical solution, when viewed in the second direction, the second winding terminating section is located between the second connection position and the second tab in the first direction. This eliminates the need to create recess or hole at the second winding terminating section to avoid the second tab, conducive to simplifying the production process of the second electrode plate and improving the production efficiency. Since there is no need to create recess or hole at the second winding terminating section to avoid the second tab, the loss of the amount of negative electrode active substance at the second winding terminating section can be avoided, conducive to reducing the risk of lithium precipitation in the battery cell and improving the safety performance of the battery cell.

In some embodiments of the first aspect of this application, the battery cell further includes second protection member, and the second protection member covers a surface of the second tab.

In the above technical solution, the second protection member covers the surface of the second tab, reducing the risk of burrs on the surface of the second tab piercing the separator, thereby conducive to reducing the risk of short circuit in the battery cell and improving the safety performance of the battery cell. The second protection member can also limit the movement of ions from the first electrode plate to a position where the second tab is disposed on the second electrode plate, reducing the risk of lithium precipitation and further improving the safety performance of the battery cell.

In some embodiments of the first aspect of this application, when viewed in the second direction, the second protection member and the first winding terminating section do not overlap.

In the above technical solution, when viewed in the second direction, the second protection member and the first winding terminating section do not overlap. Then the second protection member can utilize the space, in the straight region, on the side of the first winding terminating section facing away from the first bending section. This can alleviate the problem of increased thickness of the electrode assembly in the second direction at a position corresponding to the second protection member due to provision of the second protection member, thereby increasing the volumetric energy density of the battery cell. When viewed in the second direction, the second protection member and the first winding terminating section do not overlap, which can also reduce a thickness difference between the position of the electrode assembly corresponding to the second protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the negative electrode plate includes a second winding terminating section located in the straight region, the second winding terminating section is located on an outer side of the first winding terminating section, and in a winding direction of the electrode assembly, the second winding terminating section exceeds the first winding terminating section; and when viewed in the second direction, the second protection member and the second winding terminating section do not overlap.

In the above technical solution, in the winding direction of the electrode assembly, the second winding terminating section exceeds the first winding terminating section, allowing for more space on the side of the second winding terminating section facing away from the second bending section in the straight region. When viewed in the second direction, the second protection member and the second winding terminating section do not overlap, which can further alleviate the problem of increased thickness of the electrode assembly in the second direction at the position corresponding to the second protection member due to provision of the second protection member, thereby increasing the volumetric energy density of the battery cell. When viewed in the second direction, the second protection member and the second winding terminating section do not overlap, which can also reduce a thickness difference between the position of the electrode assembly corresponding to the second protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the first electrode plate further includes a first straight section located in the straight region, and the second electrode plate further includes a second straight section located in the straight region, where in the second direction, the first straight section and the second straight section are adjacent to each other, and the second tab is disposed at the second straight section and is located between the first straight section and the second straight section; the battery cell further includes a third protection member and a separator, where the separator is configured to separate the first electrode plate and the second electrode plate, and in the second direction, the third protection member is disposed between the second tab and the first straight section, and at least a portion of the third protection member overlaps with the second tab; and when viewed in the second direction, the third protection member and the first winding terminating section do not overlap.

In the above technical solution, provision of the third protection member can limit the movement of ions from the first straight section to a position where the second tab is disposed at the second straight section, alleviating the risk of lithium precipitation caused by the loss of negative electrode active substance at the second straight section due to provision of the second tab, thus further improving the safety performance of the battery cell. When viewed in the second direction, the third protection member and the first winding terminating section do not overlap. Then the third protection member can utilize the space, in the straight region, on the side of the first winding terminating section facing away from the first bending section. This can alleviate the problem of increased thickness of the electrode assembly in the second direction at a position corresponding to the third protection member due to provision of the third protection member, thereby increasing the volumetric energy density of the battery cell. When viewed in the second direction, the third protection member and the first winding terminating section do not overlap, which can also reduce a thickness difference between the position of the electrode assembly corresponding to the third protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell. In some embodiments of the first aspect of this application, the second electrode plate has a second winding terminating section located in the straight region, the second winding terminating section is located on an outer side of the first winding terminating section, an end of the second winding terminating section forms a second winding terminating end of the second electrode plate, and in a winding direction of the electrode assembly, the second winding terminating section exceeds the first winding terminating section; and when viewed in the second direction, the third protection member and the second winding terminating section do not overlap.

In the above technical solution, in the winding direction of the electrode assembly, the second winding terminating section exceeds the first winding terminating section, allowing for more space on the side of the second winding terminating section facing away from the second bending section in the straight region. When viewed in the second direction, the third protection member and the second winding terminating section do not overlap, which can further alleviate the problem of increased thickness of the electrode assembly in the second direction at the position corresponding to the third protection member due to provision of the third protection member, thereby increasing the volumetric energy density of the battery cell. When viewed in the second direction, the third protection member and the second winding terminating section do not overlap, which can also reduce a thickness difference between the position of the electrode assembly corresponding to the third protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, the bending region includes a first bending region and a second bending region, and the first bending region and the second bending region are respectively connected to two ends of the straight region in the first direction; the first electrode plate has a first winding starting end, and the second electrode plate has a second winding starting end, where the first winding starting end, the first winding terminating end, and the second winding terminating end are all disposed facing the second bending region, the second winding starting end is disposed facing the first bending region, and the first winding starting end is closer to the second bending region than the second winding terminating end; and when viewed in the second direction, the second protection member, the third protection member, and the second tab are located between the first winding starting end and the second winding terminating end.

In the above technical solution, when viewed in the second direction, the second protection member, the third protection member, and the second tab are located between the first winding starting end and the second winding terminating end, and the second tab, the second protection member, and the third protection member do not overlap with the first winding terminating section, which can also reduce the thickness differences between the positions of the electrode assembly corresponding to the second tab, the second protection member, and the third protection member and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

In some embodiments of the first aspect of this application, in the first direction, a largest distance between the second tab and the first winding starting end is W₁, and a smallest distance between the second tab and the first winding starting end is N₁, satisfying 2 mm ≤ W₁ - N₁ ≤ 20 mm.

In the above technical solution, if W₁ - N₁ ≤ 2 mm, the second tab is small in size, featuring weak current flow capability; and if W₁ - N₁ > 20 mm, the second tab is excessively large in size, so that the second tab occupies too much space in the first direction, requiring larger distance between the first winding starting end and the second winding terminating end in the first direction to ensure that the second tab and the second winding terminating section do not overlap when viewed in the second direction, not facilitating high energy density of the battery cell. Therefore, 2 mm ≤ W₁ - N₁ ≤ 20 mm, which ensures good current flow capability of the second tab and small distance between the first winding starting end and the second winding terminating end in the first direction, facilitating high energy density of the battery cell. In some embodiments of the first aspect of this application, in the first direction, a largest distance between the second protection member and the first winding starting end is W₂, and a smallest distance between the second protection member and the first winding starting end is N₂, satisfying 3 mm ≤ W₂ - N₂ ≤ 23 mm.

In the above technical solution, if W₂ - N₂ < 3 mm, the second protection member is excessively small in size, with small coverage area for the second tab, making it difficult to reduce the risk of burrs on the surface of the second tab piercing the separator; and if W₂ - N₂ > 23 mm, the second protection member is excessively large in size, so that the second protection member occupies too much space in the first direction, requiring larger distance between the first winding starting end and the second winding terminating end in the first direction to ensure that the second protection member and the second winding terminating section do not overlap when viewed in the second direction, not facilitating high energy density of the battery cell. Therefore, 3 mm ≤ W₂ - N₂ ≤ 23 mm, which ensures large coverage area for the second tab by the second protection member, reducing the risk of burrs on the surface of the second tab piercing the separator, and ensures small distance between the first winding starting end and the second winding terminating end in the first direction, facilitating high energy density of the battery cell.

In some embodiments of the first aspect of this application, in the first direction, a largest distance between the third protection member and the first winding starting end is W₃, and a smallest distance between the third protection member and the first winding starting end is N₃, satisfying 4 mm ≤ W₃ - N₃ ≤ 25 mm.

In the above technical solution, if W₃ - N₃ < 4 mm, the third protection member is excessively small in size, with limited capability of blocking the movement of ions from the first electrode plate to the second electrode plate covered by the second protection member, making it difficult to reduce the risk of lithium precipitation in the battery cell; and if W₃ - N₃ > 25 mm, the third protection member is excessively large in size, so that the third protection member occupies too much space in the first direction, requiring larger distance between the first winding starting end and the second winding terminating end in the first direction to ensure that the third protection member and the second winding terminating section do not overlap when viewed in the second direction, not facilitating high energy density of the battery cell. Therefore, 4 mm ≤ W₃ - N₃ ≤ 25 mm, which ensures large coverage area by the third protection member, effectively blocking the movement of ions from the first electrode plate to the second electrode plate covered by the second protection member and reducing the risk of lithium precipitation in the battery cell, and ensures small distance between the first winding starting end and the second winding terminating end in the first direction, facilitating high energy density of the battery cell.

In some embodiments of the first aspect of this application, N₁ > N₂ > N₃ > 0.5 mm.

In the above technical solution, that N₁ > N₂ > N₃ ensures that the second protection member can cover the side of the first tab closest to the first winding starting end, and the third protection member can cover the side of the second protection member closest to the first winding starting end. This helps the second protection member to completely cover the second tab in the first direction, reducing the risk of burrs on the surface of the second tab piercing the separator, and helps the third protection member to have large coverage area, effectively blocking the movement of ions from the first electrode plate to the second electrode plate covered by the second protection member, reducing the risk of lithium precipitation in the battery cell, and improving the safety of the battery cell. That 0.5 mm < N₃ facilitates fixation of the third protection member.

In some embodiments of the first aspect of this application, (W₃ - N₃) > (W₂ - N₂) > (W₁ - N₁).

In the above technical solution, that (W₃ - N₃) > (W₂ - N₂) > (W₁ - N₁) helps the second protection member to completely cover the second tab in the first direction, further reducing the risk of burrs on the surface of the second tab piercing the separator, and improving the safety of the battery cell. This also helps the third protection member to completely cover the second protection member in the first direction, effectively blocking the movement of ions from the first electrode plate to the second electrode plate covered by the second protection member, reducing the risk of lithium precipitation in the battery cell, and improving the safety of the battery cell.

In some embodiments of the first aspect of this application, the second electrode plate includes a negative electrode current collector and a first negative electrode active substance layer, the first negative electrode active substance layer is disposed on a side of the negative electrode current collector in a thickness direction, and an accommodating recess is formed on a side of the first negative electrode active substance layer facing away from the negative electrode current collector, and the accommodating recess is configured to accommodate a portion of the second tab.

In the above technical solution, the accommodating recess is formed on the side of the first negative electrode active substance layer facing away from the negative electrode current collector, and the accommodating recess is configured to accommodate a portion of the second tab. Then, when viewed in the first direction, the first negative electrode active substance layer and the negative electrode tab overlap, which can reduce the size of the electrode assembly in the second direction, conducive to increasing the volumetric energy density of the battery cell.

In some embodiments of the first aspect of this application, when viewed in the second direction, the first tab and the second tab do not overlap.

In the above technical solution, when viewed in the second direction, the first tab and the second tab do not overlap, avoiding increased size of the electrode assembly in the second direction caused by the first tab and the second tab disposed overlapping each other, conducive to increasing the volumetric energy density of the battery cell.

In some embodiments of the first aspect of this application, the first electrode plate is a positive electrode plate, the bending region includes a first bending region, in the first direction, the first bending region is connected to an end of the straight region, the positive electrode plate has a positive electrode current collector and an inner-side positive electrode active substance layer, the inner-side positive electrode active substance layer is disposed on a side of the positive electrode current collector facing the winding axis of the electrode assembly, the inner-side positive electrode active substance layer includes multiple positive electrode bending regions located in the first bending region and arranged sequentially from inside to outside, the innermost positive electrode bending portion in the first bending region is a first positive electrode active substance portion, the electrode assembly further includes a second electrode plate, the second electrode plate is a negative electrode plate, the second electrode plate has a second winding starting end, and the first positive electrode active substance portion is disposed facing the second winding starting end; and the battery cell further includes a fourth protection member, and at least a portion of the fourth protection member is located between the first positive electrode active substance portion and the second winding starting end.

In the above technical solution, the first positive electrode active substance portion is disposed facing the second winding starting end. The fourth protection member is provided between the first positive electrode active substance portion and the second winding starting end, so that the fourth protection member can limit the movement of ions from the first positive electrode active substance portion to the second winding starting end, reducing the risk of lithium precipitation at positions of the electrode assembly corresponding to the first positive electrode active substance portion and the second winding starting end, thereby conducive to improving the safety of the battery cell.

According to a second aspect, an embodiment of this application provides an electric device including the battery cell according to any embodiment of the first aspect.

### BRIEF DESCRIPTION OF DRAWINGS

To describe the technical solutions of some embodiments of this application more clearly, the following briefly describes the accompanying drawings required for describing these embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a battery cell according to some embodiments of this application;
FIG. 2 is an enlarged view of position A in FIG. 1;
FIG. 3 is a schematic structural diagram of a battery cell according to some other embodiments of this application;
FIG. 4 is an enlarged view of position B in FIG. 3;
FIG. 5 is a schematic structural diagram of a battery cell according to still some other embodiments of this application;
FIG. 6 is a schematic structural diagram of a battery cell according to yet some other embodiments of this application;
FIG. 7 is an enlarged view of position C in FIG. 1;
FIG. 8 is a schematic structural diagram of a battery cell according to still yet some other embodiments of this application;
FIG. 9 is an enlarged view of position D in FIG. 8;
FIG. 10 is a schematic structural diagram of a battery cell according to further some other embodiments of this application;
FIG. 11 is a schematic structural diagram of a battery cell according to still further some other embodiments of this application;
FIG. 12 is a schematic diagram showing a first tab disposed on a side of a first region facing away from a positive current collector according to some embodiments of this application;
FIG. 13 is a schematic diagram showing a punch not yet running through a first tab and a first electrode plate;
FIG. 14 is a schematic diagram showing a punch running through a first tab and a first electrode plate;
FIG. 15 is a schematic diagram showing fit between a first tab and a first electrode plate after a punch is withdrawn;
FIG. 16 is a schematic diagram showing riveting of a first tab and a first electrode plate in a first region;
FIG. 17 is a schematic diagram showing a punch not yet running through a first tab and a first electrode plate according to some other embodiments of this application;
FIG. 18 is a schematic diagram showing a punch running through a first tab and a first electrode plate according to some other embodiments of this application;
FIG. 19 is a schematic diagram showing fit between a first tab and a first electrode plate after a punch is withdrawn according to some other embodiments of this application;
FIG. 20 is a schematic diagram showing riveting of a first tab and a first electrode plate in a first region according to some other embodiments of this application;
FIG. 21 is an exploded view of a first tab and a first electrode plate according to still some other embodiments of this application;
FIG. 22 is a schematic diagram showing a first rivet portion inserted into a first through hole of a first electrode plate according to still some other embodiments of this application;
FIG. 23 is a schematic diagram showing riveting of a first tab and a first electrode plate in a first region according to still some other embodiments of this application;
FIG. 24 is a schematic diagram showing a rivet running through a first tab and a first electrode plate;
FIG. 25 is a schematic diagram showing riveting of a first tab and a first electrode plate using a first rivet;
FIG. 26 is a schematic diagram showing riveting of a second tab and a second electrode plate according to some embodiments of this application; and
FIG. 27 is a schematic diagram showing riveting of a second tab and a second electrode plate using a second rivet according to some embodiments of this application.

Reference signs: 100. battery cell; 10. electrode assembly; 11. straight region; 12. bending region; 12a. first bending region; 12b. second bending region; 13. first electrode plate; 131. first winding terminating section; 132. first bending section; 133. first winding terminating end; 134. positive electrode current collector; 135. first positive electrode active substance layer; 1351. first mounting recess; 1352. first region; 1353. first through hole; 1354. first surface; 1355. second surface; 136. second positive electrode active substance layer; 136a. inner-side positive electrode active substance layer; 136a1. first positive electrode active substance portion; 137. first winding starting end; 138. first winding starting section; 139. third bending section; 13a. first straight section; 14. first tab; 141. first body portion; 142. first rivet portion; 1421. first limiting portion; 15. second electrode plate; 151. second winding terminating section; 152. second bending section; 153. second winding terminating end; 154. negative electrode current collector; 155. first negative electrode active substance layer; 1551. accommodating recess; 1552. second region; 1553. second through hole; 1554. third surface; 1555. fourth surface; 156. second negative electrode active substance layer; 157. second winding starting end; 158. second winding starting section; 159. fourth bending section; 15a. second straight section; 16. second tab; 161. second body portion; 162. second rivet portion; 1621. second limiting portion; 17. separator; 20. first protection member; 30. second protection member; 40. third protection member; 50. fourth protection member; 51. first section; 52. second section; 53. third section; X. first direction; Y second direction; Z. extension direction of winding axis; Z1. width direction; M. thickness direction; P1. first connection position; P2. second connection position; 200. punch; 300. first rivet; 310. first limiting structure; 400. second rivet; and 410. second limiting structure.

### DESCRIPTION OF EMBODIMENTS

To make the objectives, technical solutions, and advantages of some embodiments of this application clearer, the following clearly and completely describes the technical solutions in some embodiments of this application with reference to the accompanying drawings in these embodiments of this application. Apparently, the described embodiments are some but not all embodiments of this application. Generally, the components in some embodiments of this application as described and illustrated in the accompanying drawings herein can be arranged and designed in a variety of configurations.

Therefore, the following detailed description of some embodiments of this application as provided in the accompanying drawings is not intended to limit the protection scope of this application but merely to represent selected embodiments of this application. All other embodiments obtained by persons of ordinary skill in the art based on some embodiments of this application without creative efforts shall fall within the protection scope of this application.

It should be noted that in absence of conflicts, some embodiments and features in some embodiments in this application may be combined with each other.

It should be noted that similar reference numerals and letters indicate similar items in the following drawings, and therefore once an item is defined in one drawing, it does not need to be further defined or explained in the subsequent drawings.

In the description of some embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from the perspective of market development, battery cells have been increasingly widely used. Battery cells have been widely used in many fields such as electric transportation tools including electric bicycles, electric motorcycles, and electric vehicles, electric tools, drones, and energy storage devices. With continuous expansion of application fields of battery cells, market demands for battery cells are also increasing.

A battery cell includes an electrode assembly, where the electrode assembly includes a separator, a positive electrode plate, and a negative electrode plate, and the electrode assembly operates through the movement of metal ions between the positive electrode plate and the negative electrode plate. A cycling process of the battery cell is a process of metal ions moving from the positive electrode plate to the negative electrode plate and then from the negative electrode plate to the positive electrode plate. The electrode assembly further includes a positive electrode tab and a negative electrode tab, where the positive electrode tab is electrically connected to the positive electrode plate, and the negative electrode tab is electrically connected to the negative electrode plate. The battery cell implements charge and discharge through the positive electrode tab and the negative electrode tab. For a wound electrode assembly, the electrode assembly includes a straight region and a bending region. At least one end of the straight region in a first direction is provided with the bending region. The positive electrode tab and the negative electrode tab can both be disposed in the straight region. However, at least one of the positive electrode tab and the negative electrode tab protrudes from a surface of a corresponding electrode plate in a second direction, to be specific, the positive electrode tab protrudes from a surface of the positive electrode plate in the second direction, and/or the negative electrode tab protrudes from a surface of the negative electrode plate in the second direction, leading to increased size of the electrode assembly in the second direction at a position corresponding to the positive electrode tab and/or the negative electrode tab, which reduces the volumetric energy density of the battery cell. In addition, when the electrode assembly is subjected to extrusion in the second direction, the tab protrudes in the second direction, which may cause lithium precipitation due to uneven local stresses on the electrode plate, thereby reducing the safety performance of the battery cell.

Based on the above considerations, to alleviate the problems of low volumetric energy density and low safety performance of battery cells, some embodiments of this application provide a battery cell. An electrode assembly of the battery cell includes a first electrode plate and a first tab, where the first tab is electrically connected to the first electrode plate, the first tab is located in a straight region, and the first tab at least partially protrudes from a surface of the first electrode plate in a second direction; and the first electrode plate includes a first winding terminating section located in the straight region and a first bending section located in a bending region, one end of the first winding terminating section is connected to the first bending section, and another end of the first winding terminating section is a first winding terminating end of the first electrode plate. When viewed in the second direction, the first tab and the first winding terminating section do not overlap, and an extension direction of a winding axis of the electrode assembly, a first direction, and the second direction are perpendicular to each other.

The first tab is located in the straight region, and the first tab at least partially protrudes from the surface of the first electrode plate in the second direction. When viewed in the second direction, the first tab and the first winding terminating section do not overlap. Then the first tab can utilize the space, in the straight region, on a side of the first winding terminating section facing away from the first bending section. This can alleviate the problem of increased thickness of the electrode assembly in the second direction at a position corresponding to the first tab caused by the first tab protruding from the surface of the first electrode plate in the straight region, thereby increasing the volumetric energy density of the battery cell. When viewed in the second direction, the first tab and the first winding terminating section do not overlap, which can also reduce a thickness difference between the position of the electrode assembly corresponding to the first tab and other positions of the electrode assembly in the straight region. This can alleviate the problem of possible lithium precipitation due to uneven local stresses on the electrode plate when the electrode assembly is subjected to extrusion in the second direction, thereby conducive to improving the safety performance of the battery cell.

The battery cell disclosed in some embodiments of this application may be used without limitation in an electric device such as an electric two-wheeler, an electric tool, a drone, or an energy storage device. A battery cell with the working conditions of this application may also be used as a power supply system of an electric device, which is conducive to increasing the energy density of the battery cell.

An embodiment of this application provides an electric device that uses a battery cell as a power source. The electric device may be but is not limited to an electronic device, an electric tool, an electric transportation tool, a drone, or an energy storage device. The electronic device may include a mobile phone, a tablet computer, a notebook computer, or the like, the electric tool may include an electric drill, an electric saw, or the like, and the electric transportation tool may include an electric vehicle, an electric motorcycle, an electric bicycle, or the like.

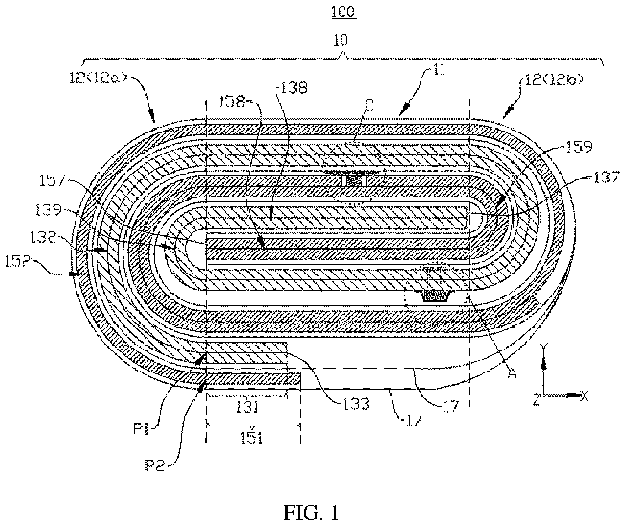

As shown in FIGs. 1 to 4, a battery cell 100 includes an electrode assembly 10. The electrode assembly 10 is a wound structure. The electrode assembly 10 includes a straight region 11 and a bending region 12. In a first direction X, at least one end of the straight region 11 is connected to the bending region 12. The electrode assembly 10 includes a first electrode plate 13 and a first tab 14. The first tab 14 is electrically connected to the first electrode plate 13, the first tab 14 is located in the straight region 11, and the first tab 14 at least partially protrudes from a surface of the first electrode plate 13 in a second direction Y. The first electrode plate 13 includes a first winding terminating section 131 located in the straight region 11 and a first bending section 132 located in the bending region 12. One end of the first winding terminating section 131 is connected to the first bending section 132, and another end of the first winding terminating section 131 is a first winding terminating end 133 of the first electrode plate 13. When viewed in the second direction Y, the first tab 14 and the first winding terminating section 131 do not overlap, and an extension direction Z of a winding axis of the electrode assembly 10, the first direction X, and the second direction Y are perpendicular to each other.

The electrode assembly 10 includes two bending regions 12. In the first direction X, the two bending regions 12 are respectively connected to two ends of the straight region 11. The two bending regions 12 are respectively a first bending region 12a and a second bending region 12b. The first bending section 132 is located in the first bending region 12a.

The first tab 14 is electrically connected to the first electrode plate 13. Along the extension direction Z of the winding axis, the first tab 14 protrudes from an end of the first electrode plate 13 to facilitate the output of electrical energy from the battery cell 100 or input of electrical energy to the battery cell 100. The first tab 14 may be connected to an end of the first electrode plate 13 in the extension direction Z of the winding axis, so that the first tab 14 protrudes from the first electrode plate 13 along the extension direction Z of the winding axis. The first tab 14 may alternatively be connected to a side of the first electrode plate 13 in a thickness direction M. When viewed in the second direction Y, a portion of the first tab 14 overlaps with the first electrode plate 13, and another portion of the first tab 14 protrudes from an end of the first electrode plate 13 along the extension direction Z of the winding axis.

The first tab 14 is connected to a portion, located in the straight region 11, of the first electrode plate 13. The first tab 14 protrudes from a surface of a portion, connected to the first tab 14, of the first electrode plate 13 in the second direction Y. When viewed in the first direction X, the first tab 14 and the portion, connected to the first tab 14, of the first electrode plate 13 at least partially do not overlap in the second direction Y. The first winding terminating section 131 is the final section of the first electrode plate 13. The first winding terminating section 131 is located in the straight region 11. The first bending section 132 is located in the first bending region 12a. The first winding terminating section 131 and the first bending section 132 are connected at a first connection position P1. When viewed in the second direction Y, a connection position of the first bending region 12a and the straight region 11 overlaps with the first connection position P1. In the first direction X, an end of the first winding terminating section 131 facing away from the first connection position P1 is the first winding terminating end 133. The first winding terminating end 133 is a winding end position of the first electrode plate 13. When viewed in the second direction Y, the connection position of the straight region 11 and the second bending region 12b does not overlap with the first winding terminating end 133, and the first winding terminating end 133 is located between the first connection position P1 and the connection position of the straight region 11 and the second bending region 12b, facilitating the termination and fixation of the first winding terminating section 131.

When viewed in the second direction Y, a projection of the first tab 14 does not overlap with a projection of the first winding terminating section 131.

The first tab 14 is located in the straight region 11, and the first tab 14 at least partially protrudes from the surface of the first electrode plate 13 in the second direction Y. When viewed in the second direction Y, the first tab 14 and the first winding terminating section 131 do not overlap. Then the first tab 14 can utilize the space, in the straight region 11, on a side of the first winding terminating section 131 facing away from the first bending section 132. This can alleviate the problem of increased thickness of the electrode assembly 10 in the second direction Y at a position corresponding to the first tab 14 caused by the first tab 14 protruding from the surface of the first electrode plate 13 in the straight region 11, thereby increasing the volumetric energy density of the battery cell 100. When viewed in the second direction Y, the first tab 14 and the first winding terminating section 131 do not overlap, which can also reduce a thickness difference between the position of the electrode assembly 10 corresponding to the first tab 14 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

The first electrode plate 13 may be a positive electrode plate or a negative electrode plate.

If the first electrode plate 13 is a negative electrode plate, the first tab 14 is a negative electrode tab electrically connected to the negative electrode plate, the negative electrode tab is located in the straight region 11, and in the second direction Y, the negative electrode tab protrudes from the surface of the negative electrode plate in the second direction Y. When viewed in the second direction Y, the negative electrode tab and a winding terminating section of the negative electrode plate do not overlap. Then the negative electrode tab can utilize the space, in the straight region 11, on a side of the winding terminating section, of the negative electrode plate, facing away from the first bending section 132. This can alleviate the problem of increased thickness of the electrode assembly 10 in the second direction Y at a position corresponding to the negative electrode tab caused by the negative electrode tab protruding from the surface of the negative electrode plate in the straight region 11, thereby increasing the volumetric energy density of the battery cell 100. When viewed in the second direction Y, the negative electrode tab and the winding terminating section of the negative electrode plate do not overlap, which can also reduce a thickness difference between the position of the electrode assembly 10 corresponding to the negative electrode tab and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

If the first electrode plate 13 is a positive electrode plate, the first tab 14 is a positive electrode tab electrically connected to the positive electrode plate, the positive electrode tab is located in the straight region 11, and in the second direction Y, the positive electrode tab protrudes from the surface of the positive electrode plate in the second direction Y. When viewed in the second direction Y, the positive electrode tab and a winding terminating section of the positive electrode plate do not overlap. Then the positive electrode tab can utilize the space, in the straight region 11, on a side of the winding terminating section, of the positive electrode plate, facing away from the first bending section 132. This can alleviate the problem of increased thickness of the electrode assembly 10 in the second direction Y at a position corresponding to the positive electrode tab caused by the positive electrode tab protruding from the surface of the positive electrode plate in the straight region 11, thereby increasing the volumetric energy density of the battery cell 100. When viewed in the second direction Y, the positive electrode tab and the winding terminating section of the positive electrode plate do not overlap, which can also reduce a thickness difference between the position of the electrode assembly 10 corresponding to the positive electrode tab and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

As shown in FIGs. 1 to 4, in an embodiment in which the first electrode plate 13 is a positive electrode plate, the first electrode plate 13 includes a positive electrode current collector 134 and a first positive electrode active substance layer 135. The first positive electrode active substance layer 135 is disposed on a side of the positive electrode current collector 134 in a thickness direction M. The positive electrode tab is connected to a surface of the first positive electrode active substance layer 135 facing away from the positive electrode current collector 134 and is electrically connected to the positive electrode current collector 134.

The first electrode plate 13 further includes a second positive electrode active substance layer 136. The first positive electrode active substance layer 135 and the second positive electrode active substance layer 136 are respectively disposed on two sides of the positive electrode current collector 134. The first positive electrode active substance layer 135 and the second positive electrode active substance layer 136 may be respectively applied on two sides of the positive electrode current collector 134 through continuous coating, without changing the coating method during coating or only changing the coating thickness, which can improve the coating efficiency, thereby improving the production efficiency of the first electrode plate 13.

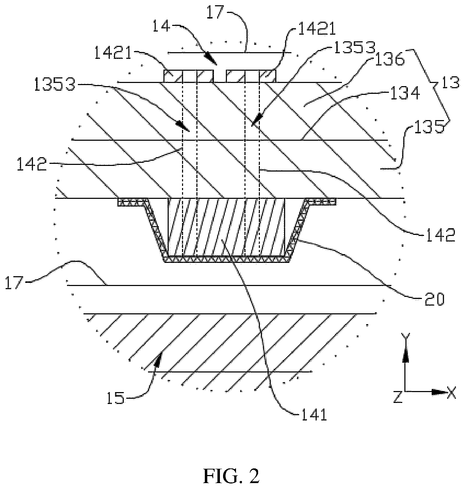

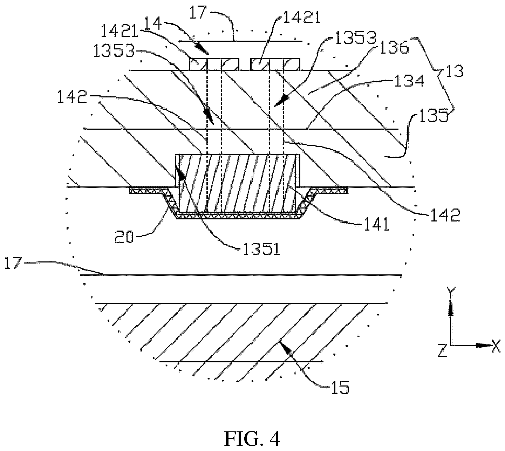

As shown in FIGs. 2 and 4, the first positive electrode active substance layer 135 may be disposed on a side of the positive electrode current collector 134 facing away from the winding axis, and the first tab 14 is disposed on a surface of the first active substance layer facing away from the winding axis.

In some other embodiments, the first positive electrode active substance layer 135 may be disposed on a side of the positive electrode current collector 134 facing the winding axis, and the first tab 14 is disposed on a surface of the first active substance layer facing the winding axis.

The first tab 14 is connected to the surface of the first positive electrode active substance layer 135 facing away from the positive electrode current collector 134. The thickness of the first positive electrode active substance layer 135 overlapping with the first tab 14 in the second direction Y is the same as the thickness of the first positive electrode active substance layer 135 not overlapping with the first tab 14.

In some embodiments, in a winding direction, any two sides of the positive electrode current collector 134 may be provided with the first positive electrode active substance layer 135 and the second positive electrode active substance layer 136, so that the first electrode plate 13 has a large amount of positive electrode active substance, which is conducive to increasing the volumetric energy density of the battery cell 100. Since any two sides of the positive electrode current collector 134 may be provided with the first positive electrode active substance layer 135 and the second positive electrode active substance layer 136, continuous coating is applicable to manufacturing of the first electrode plate 13, thereby improving the production efficiency of the first electrode plate 13.

Certainly, in some embodiments, in the winding direction, a partial region of the positive electrode current collector 134 may be provided with a positive electrode active substance layer on only one side, while the other side is provided with no positive electrode active substance layer, creating a positive electrode uncoated foil region. For example, in an embodiment in which the first winding terminating section 131 is in the outermost-layer electrode plate of the electrode assembly 10, at the first winding terminating section 131, the side of the positive electrode current collector 134 facing the winding axis is provided with the positive electrode active substance layer, while the side of the positive electrode current collector 134 facing away from the winding axis is provided with no positive electrode active substance layer, creating an uncoated foil region, which can reduce the waste of positive electrode active substance and lower the risk of lithium precipitation.

The battery cell 100 being a lithium-ion battery is used as an example, for which, the positive electrode current collector 134 may be made of aluminum, and the first positive electrode active substance layer 135 and the second positive electrode active substance layer 136 may be lithium cobaltate, lithium iron phosphate, ternary lithium, lithium manganate, or the like.

When the first electrode plate 13 is a positive electrode plate, the first tab 14 is connected to the surface of the first positive electrode active substance layer 135 facing away from the positive electrode current collector 134. This facilitates more convenient connection between the first electrode plate 13 and the first tab 14 and also eliminates the need to reserve a mounting recess on the first electrode plate 13 for mounting the first tab 14 during manufacturing of the first electrode plate 13, thereby improving the production efficiency of the first electrode plate 13 and avoiding the loss of the amount of active substance of the first electrode plate 13, conducive to increasing the energy density of the battery cell 100.

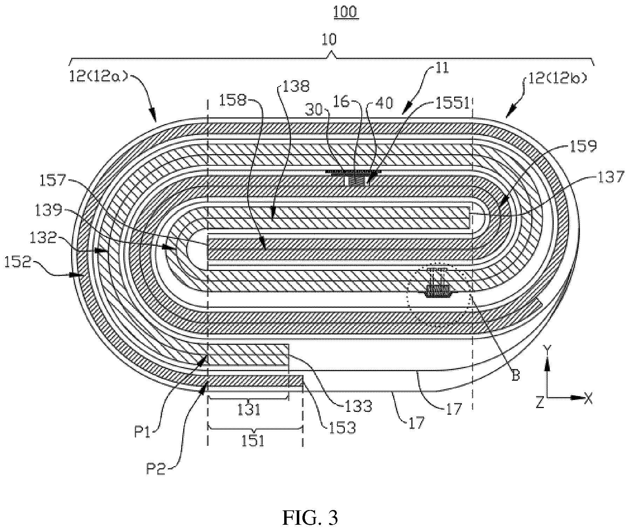

As shown in FIGs. 3 and 4, in some other embodiments, a first mounting recess 1351 may be provided on the surface of the first positive electrode active substance layer 135 facing away from the positive electrode current collector 134. A portion of the first tab 14 is accommodated in the first mounting recess 1351. In the second direction Y, the first tab 14 extends out of the first mounting recess 1351, and in the extension direction Z of the winding axis, the first tab 14 extends out of the first mounting recess 1351. The first mounting recess 1351 may be formed using laser etching, milling, or the like on the first positive electrode active substance layer 135 after coating of the first positive electrode active substance layer 135 is finished. The first mounting recess 1351 may be formed by reserving a position of the first mounting recess 1351 on the positive electrode current collector 134 using an adhesive tape and removing the adhesive tape after coating of the first positive electrode active substance layer 135 is finished, then the first mounting recess 1351 is formed. In the second direction Y, depth of the first mounting recess 1351 may be less than or equal to thickness of the first positive electrode active substance layer 135. FIGs. 3 and 4 show the case in which the depth of the first mounting recess 1351 is less than the thickness of the first positive electrode active substance layer 135.

There are various ways to ensure that when viewed in the second direction Y, the first tab 14 and the first winding terminating section 131 do not overlap. For example, the first tab 14 is connected to an end of the first electrode plate 13 in the extension direction Z of the winding axis. If the first electrode plate 13 has the same width in the extension direction Z of the winding axis at any position in the winding direction, in the second direction Y, the first tab 14 and the first winding terminating section 131 are arranged side by side in the extension direction Z of the winding axis and the first tab 14 and the first winding terminating section 131 do not overlap. For another example, the first tab 14 is connected to a side of the first electrode plate 13 in the thickness direction M. In an embodiment, when viewed in the second direction Y, a portion of the first tab 14 overlaps with the first electrode plate 13, and another portion of the first tab 14 protrudes from an end of the first electrode plate 13 in the extension direction Z of the winding axis. In this case, a first avoidance recess (not shown in the figure) may be provided at the first winding terminating section 131. The first avoidance recess extends along the extension direction Z of the winding axis to an end of the first winding terminating section 131 to create a first notch at the end of the first winding terminating section 131 in the extension direction Z of the winding axis. A direction of the first notch is the same as the direction along which the first tab 14 protrudes from the first electrode plate 13 in the extension direction Z of the winding axis. When viewed in the second direction Y, the portion of the first tab 14 overlapping with the first electrode plate 13 is located in the first avoidance recess. In this way, during flattening of the electrode assembly 10 in the second direction Y, the first avoidance recess can accommodate a portion of the electrode plate or first tab 14, alleviating the problem of increased size of the electrode assembly 10 in the second direction Y caused by the first tab 14 protruding from the surface of the first electrode plate 13 in the second direction Y.

As shown in FIGs. 1 and 3, in some other embodiments, the first winding terminating section 131 is connected to the first bending section 132 at the first connection position P1. When viewed in the second direction Y, the first winding terminating section 131 is located between the first connection position P1 and the first tab 14 in the first direction X.

It can be understood that when viewed in the second direction Y, the first tab 14 is located between a connection position of the second bending region 12b and the straight region 11 and the first winding terminating end 133.

When viewed in the second direction Y, the first winding terminating section 131 is located between the first connection position P1 and the first tab 14 in the first direction X. This eliminates the need to create recess or hole at the first winding terminating section 131 to avoid the first tab 14, conducive to simplifying the production process of the first electrode plate 13 and improving the production efficiency. Since there is no need to create recess or hole at the first winding terminating section 131 to avoid the first tab 14, the loss of the amount of active substance of the first electrode plate 13 at the first winding terminating section 131 can be avoided, conducive to increasing the energy density of the battery cell 100 when the first electrode plate 13 is a positive electrode plate, and conducive to reducing the risk of lithium precipitation in the battery cell 100 in the embodiment in which the first electrode plate 13 is a negative electrode plate.

As shown in FIGs. 1 and 3, in some embodiments, the electrode assembly 10 further includes a second electrode plate 15 with a polarity opposite to a polarity of the first electrode plate 13. In the second direction Y, the first tab 14 is located between the first electrode plate 13 and the second electrode plate 15.

In the second direction Y, the portion, provided with the first tab 14, of the first electrode plate 13 has the second electrode plate 15 provided on both sides in the second direction Y. The first tab 14 is neither arranged in the outermost ring of the first electrode plate 13 nor arranged in the innermost ring of the first electrode plate 13, but is arranged in a middle ring of the first electrode plate 13.

In the second direction Y, the first tab 14 is located between the first electrode plate 13 and the second electrode plate 15, facilitating good current flow capability of the first tab 14.

In some embodiments, the first electrode plate 13 further has a first winding starting end 137, and in the winding direction of the electrode assembly 10, length of the first electrode plate 13 is L₁, and a largest distance between the first winding starting end 137 and the first tab 14 is L₂, satisfying L₁/4 ≤ L₂ ≤ 3L₁/4.

The first winding starting end 137 is a winding start position of the first electrode plate 13. The first electrode plate 13 further includes a first winding starting section 138 located in the straight region 11 and a third bending section 139 located in the bending region 12. One end of the first winding starting section 138 is connected to the third bending section 139, and another end of the first winding starting section 138 is the first winding starting end 137. The third bending section 139 is the first bending section formed through winding of the first electrode plate 13. Two sides of the positive electrode current collector 134 located at the first winding starting section 138 are respectively provided with the first positive electrode active substance layer 135 and the second positive electrode active substance layer 136. The winding starting ends of the positive electrode current collector 134, first positive electrode active substance layer 135, and second positive electrode active substance layer 136 are flush with each other and together form the first winding starting end 137 of the first electrode plate 13. In this embodiment, the first winding starting section 138 is located in the straight region 11. When viewed in the second direction Y, the connection position of one bending region 12 and the straight region 11 overlaps with the first winding starting end 137. In this embodiment, when viewed in the second direction Y, the connection position of the second bending region 12b and the straight region 11 overlaps with the first winding starting end 137, and the connection position of the first bending region 12a and the straight region 11 overlaps with the connection position of the first winding starting section 138 and the third bending section 139. In some other embodiments, when viewed in the second direction Y, the connection position of the second bending region 12b and the straight region 11 may not overlap with the first winding starting end 137.

L₁ and L₂ are sizes in the winding direction and are not convenient to be shown in the figure, and therefore L₁ and L₂ are not shown in the figure. With reference to the winding direction and the positions of the first winding starting end 137 and first tab 14 shown in the figure, L₁ and L₂ are understandable.

L₁/4 ≤ L₂ ≤ 3L₁/4, so that the first tab 14 can be located in the straight region 11, and the first tab 14 can be connected to a middle ring of the first electrode plate 13, facilitating good current flow capability of the first tab 14.

As shown in FIGs. 1 and 3, in some embodiments, the first electrode plate 13 is a positive electrode plate, the electrode assembly 10 further includes a second electrode plate 15, and the second electrode plate 15 is a negative electrode plate. The second electrode plate 15 includes a second winding terminating section 151 located in the straight region 11 and a second bending section 152 located in the bending region 12. One end of the second winding terminating section 151 is connected to the second bending section 152, and another end of the second winding terminating section 151 is a second winding terminating end 153 of the second electrode plate 15. The second winding terminating section 151 is located on an outer side of the first winding terminating section 131. In the winding direction of the electrode assembly 10, the second winding terminating section 151 exceeds the first winding terminating section 131. When viewed in the second direction Y, the first tab 14 and the second winding terminating section 151 do not overlap.

The second electrode plate 15 is a negative electrode plate. The second electrode plate 15 can include a negative electrode current collector 154, a first negative electrode active substance layer 155, and a second negative electrode active substance layer 156. The first negative electrode active substance layer 155 and the second negative electrode active substance layer 156 are respectively disposed on two sides of the negative electrode current collector 154. The first negative electrode active substance layer 155 and the second negative electrode active substance layer 156 may be respectively applied on two sides of the negative electrode current collector 154 through continuous coating, without changing the coating method during coating or only changing the coating thickness, which can improve the coating efficiency, thereby improving the production efficiency of the first electrode plate 13.

In some embodiments, in the winding direction, any two sides of the negative electrode current collector 154 may be provided with the first negative electrode active substance layer 155 and the second negative electrode active substance layer 156, so that the second electrode plate 15 has a large amount of negative electrode active substance, which is conducive to increasing the volumetric energy density of the battery cell 100 and reducing the risk of lithium precipitation in the battery cell 100. Since any two sides of the negative electrode current collector 154 may be provided with the first negative electrode active substance layer 155 and the second negative electrode active substance layer 156, continuous coating is applicable to manufacturing of the second electrode plate 15, thereby improving the production efficiency of the second electrode plate 15.

Certainly, in some embodiments, in the winding direction, a partial region of the negative electrode current collector 154 may be provided with a negative electrode active substance layer on only one side, while the other side is provided with no negative electrode active substance layer, creating a negative electrode uncoated foil region. For example, in an embodiment in which the second winding terminating section 151 is in the outermost-layer electrode plate of the electrode assembly 10, the side of the negative electrode current collector 154 facing the winding axis is provided with the negative electrode active substance layer, while the side of the negative electrode current collector 154 facing away from the winding axis is provided with no negative electrode active substance layer, creating an uncoated foil region, which allows the negative electrode active substance on the second electrode plate 15 to play its function, reducing the waste of negative electrode active substance on the second electrode plate 15 and reducing costs.

The battery cell 100 being a lithium-ion battery is used as an example. The negative electrode current collector 154 may be made of copper, and the first negative electrode active substance layer 155 and the second negative electrode active substance layer 156 may be carbon, silicon, or the like.

The second winding terminating section 151 is the final section of the second electrode plate 15. The second winding terminating section 151 is located in the straight region 11. The second bending section 152 is located in the first bending region 12a. The second winding terminating section 151 and the second bending section 152 are connected at a second connection position P2. When viewed in the second direction Y, a connection position of the first bending region 12a and the straight region 11 overlaps with the second connection position P2. In the first direction X, an end of the second winding terminating section 151 facing away from the second connection position P2 is the second winding terminating end 153. The second winding terminating end 153 is a winding end position of the second electrode plate 15. When viewed in the second direction Y, the connection position of the straight region 11 and the second bending region 12b does not overlap with the second winding terminating end 153, and the second winding terminating end 153 is located between the connection position of the straight region 11 and the second bending region 12b and the second connection position P2, facilitating the termination and fixation of the second winding terminating section 151.

The second winding terminating section 151 and the first winding terminating section 131 are adjacent to each other in the second direction Y. The second winding terminating section 151 is located on a side of the first winding terminating section 131 facing away from the winding axis.

When viewed in the second direction Y, a projection of the first tab 14 does not overlap with a projection of the second winding terminating section 151.

In the winding direction of the electrode assembly 10, the second winding terminating section 151 exceeds the first winding terminating section 131, allowing for more space on the side of the second winding terminating section 151 facing away from the second bending section 152 in the straight region 11 of the electrode assembly 10. When viewed in the second direction Y, the first tab 14 and the second winding terminating section 151 do not overlap, which can further alleviate the problem of increased thickness of the electrode assembly 10 in the second direction Y at the position corresponding to the first tab 14 caused by the first tab 14 protruding from the surface of the first electrode plate 13 in the straight region 11, thereby increasing the volumetric energy density of the battery cell 100. When viewed in the second direction Y, the first tab 14 and the second winding terminating section 151 do not overlap, which can also reduce a thickness difference between the position of the electrode assembly 10 corresponding to the first tab 14 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

There are various ways to ensure that when viewed in the second direction Y, the first tab 14 and the second winding terminating section 151 do not overlap. To alleviate the problem of lithium precipitation, in the extension direction Z of the winding axis, two ends of the negative electrode plate exceed two ends of the positive electrode plate.

When viewed in the second direction Y, the first tab 14 and the negative electrode plate have an overlapping region. A second avoidance recess (not shown in the figure) may be provided at the second winding terminating section 151. The second avoidance recess extends along the extension direction Z of the winding axis to an end of the second winding terminating section 151 to create a second notch at the end of the second winding terminating section 151 in the extension direction Z of the winding axis. A direction of the second notch is the same as the direction along which the first tab 14 protrudes from the first electrode plate 13 in the extension direction Z of the winding axis. When viewed in the second direction Y, the portion of the first tab 14 overlapping with the second electrode plate 15 is located in the second avoidance recess. In this way, during flattening of the electrode assembly 10 in the second direction Y, the second avoidance recess can accommodate a portion of the electrode plate or first tab 14, alleviating the problem of increased size of the electrode assembly 10 in the second direction Y caused by the first tab 14 protruding from the surface of the first electrode plate 13 in the second direction Y.

In some other embodiments, the second winding terminating section 151 is connected to the second bending section 152 at the second connection position P2. When viewed in the second direction Y, the second winding terminating section 151 is located between the second connection position P2 and the first tab 14 in the first direction X. It can be understood that when viewed in the second direction Y, the first tab 14 is located between the connection position of the second bending region 12b and the straight region 11 and the second winding terminating end 153.

When viewed in the second direction Y, the second winding terminating section 151 is located between the second connection position P2 and the first tab 14 in the first direction X. This eliminates the need to create recess or hole at the second winding terminating section 151 to avoid the first tab 14, conducive to simplifying the production process of the second electrode plate 15 and improving the production efficiency. Since there is no need to create recess or hole at the second winding terminating section 151 to avoid the first tab 14, the loss of the amount of negative electrode active substance at the second winding terminating section 151 can be avoided, conducive to reducing the risk of lithium precipitation in the battery cell 100 and improving the safety performance of the battery cell 100.

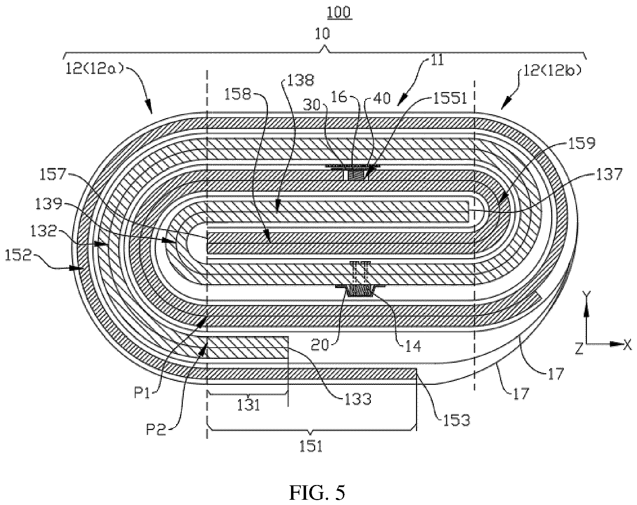

In some other embodiments, as shown in FIG. 5, it is also possible that when viewed in the second direction Y, the first tab 14 does not overlap with the first winding terminating section 131, but the first tab 14 overlaps with the second winding terminating section 151. This can also alleviate, to some extent, the problem of increased size of the electrode assembly 10 caused by the first tab 14 protruding from the surface of the first electrode plate 13 in the second direction Y.

As shown in FIGs. 1 to 4, in some embodiments, the battery cell 100 further includes a first protection member 20. The first protection member 20 covers a surface of the first tab 14.

When viewed in the second direction Y, at least a portion of the first tab 14 overlaps with the first protection member 20. At least a portion of the first protection member 20 covers a surface of the first tab 14 facing a separator 17, so that the first protection member 20 can separate the separator 17 from the first tab 14. The first protection member 20 may be an adhesive tape that comes with adhesive, or the first protection member 20 may be a coating, for example, an insulation layer, applied to the surface of the first tab 14 facing the separator 17.

In some embodiments, as shown in FIGs. 2 and 4, a portion of the first protection member 20 covers at least a portion of the surface of the first tab 14 facing the separator 17. The first protection member 20 may be adhered to the surface of the first tab 14, or the first protection member 20 may be in contact with the surface of the first tab 14. Another portion of the first protection member 20 extends along the first direction X to be adhered to the first electrode plate 13, so as to fix the first protection member 20, improving the stability of the first protection member 20.

The first protection member 20 covers the surface of the first tab 14, reducing the risk of burrs on the surface of the first tab 14 piercing the separator 17, thereby conducive to reducing the risk of short circuit in the battery cell 100 and improving the safety performance of the battery cell 100.

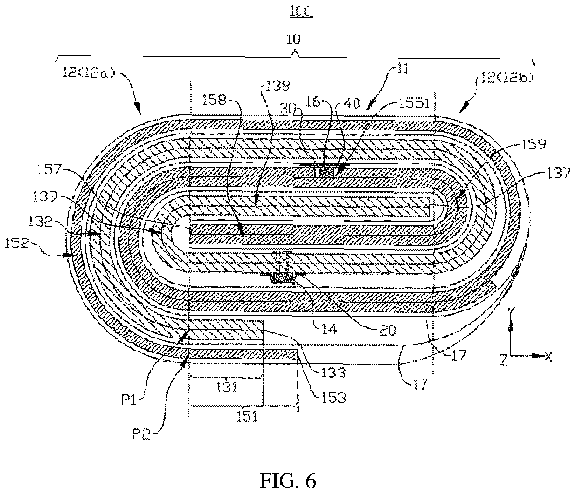

As shown in FIG. 6, in some embodiments, when viewed in the second direction Y, the first protection member 20 may overlap with the first winding terminating section 131 at a portion, and another portion of the first protection member 20 does not overlap with the first winding terminating section 131.

As shown in FIGs. 1, 3, and 5, in some other embodiments, when viewed in the second direction Y, the first protection member 20 and the first winding terminating section 131 do not overlap.

The first winding terminating section 131 is provided with a first avoidance recess, so that in an embodiment in which the first tab 14 and the first winding terminating section 131 do not overlap, when viewed in the second direction Y, a second protection member 30 may also be located in the first avoidance recess, ensuring that when viewed in the second direction Y, the first protection member 20 and the first winding terminating section 131 do not overlap.

Certainly, as shown in FIGs. 1, 3, and 5, in an embodiment in which the first winding terminating section 131 is located between the first connection position P1 and the first tab 14, the first winding terminating section 131 may also be located between the first connection position P1 and the first protection member 20. In other words, the first protection member 20 is located between the connection position of the second bending region 12b and the straight region 11 and the first winding terminating end 133, ensuring that when viewed in the second direction Y, the first protection member 20 and the first winding terminating section 131 do not overlap. This eliminates the need to create recess or hole at the first winding terminating section 131 to avoid the first protection member 20, and the loss of the amount of active substance at the first winding terminating section 131 can be avoided.

When viewed in the second direction Y, the first protection member 20 and the first winding terminating section 131 do not overlap. Then the first protection member 20 can utilize the space, in the straight region 11, on the side of the first winding terminating section 131 facing away from the first bending section 132. This can alleviate the problem of increased thickness of the electrode assembly 10 in the second direction Y at the position corresponding to the first protection member 20 due to provision of the first protection member 20, thereby increasing the volumetric energy density of the battery cell 100. When viewed in the second direction Y, the first protection member 20 and the first winding terminating section 131 do not overlap, which can also reduce a thickness difference between the position of the electrode assembly 10 corresponding to the first protection member 20 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

As shown in FIGs. 1 and 3, in an embodiment, the first electrode plate 13 is a positive electrode plate, the second electrode plate 15 is a negative electrode plate, the second winding terminating section 151 is located on the outer side of the first winding terminating section 131, and in the winding direction of the electrode assembly 10, the second winding terminating section 151 exceeds the first winding terminating section 131. In this case, when viewed in the second direction Y, the first protection member 20 and the second winding terminating section 151 do not overlap.

The second winding terminating section 151 is provided with a second avoidance recess, so that in an embodiment in which the first tab 14 and the second winding terminating section 151 do not overlap, when viewed in the second direction Y, the first protection member 20 may also be located in the second avoidance recess, ensuring that when viewed in the second direction Y, the first protection member 20 and the second winding terminating section 151 do not overlap.

Certainly, as shown in FIGs. 1 and 3, in an embodiment in which the second winding terminating section 151 is located between the second connection position P2 and the first tab 14, the second winding terminating section 151 may also be located between the second connection position P2 and the first protection member 20. In other words, the first protection member 20 is located between the connection position of the second bending region 12b and the straight region 11 and the second winding terminating end 153, ensuring that when viewed in the second direction Y, the first protection member 20 and the second winding terminating section 151 do not overlap. This eliminates the need to create recess or hole at the second winding terminating section 151 to avoid the first protection member 20, and the loss of the amount of active substance at the second winding terminating section 151 can be avoided.

In the winding direction of the electrode assembly 10, the second winding terminating section 151 exceeds the first winding terminating section 131, allowing for more space on the side of the second winding terminating section 151 facing away from the second bending section 152 in the straight region 11. When viewed in the second direction Y, the first protection member 20 and the second winding terminating section 151 do not overlap, which can further alleviate the problem of increased thickness of the electrode assembly 10 in the second direction Y at the position corresponding to the first protection member 20 due to provision of the first protection member 20, thereby increasing the volumetric energy density of the battery cell 100. When viewed in the second direction Y, the first protection member 20 and the negative electrode winding terminating section do not overlap, which can also reduce a thickness difference between the position of the electrode assembly 10 corresponding to the first protection member 20 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

Certainly, in some other embodiments, as shown in FIG. 5, it is also possible that when viewed in the second direction Y, the first protection layer does not overlap with the first winding terminating section 131, but at least a portion of the first protection layer overlaps with the second winding terminating section 151. This can also alleviate, to some extent, the problem of increased size of the electrode assembly 10 in the second direction Y due to provision of the first protection layer. FIG. 5 shows the case in which the first protection layer does not overlap with the first winding terminating section 131, and the first protection layer entirely overlaps with the second winding terminating section 151.

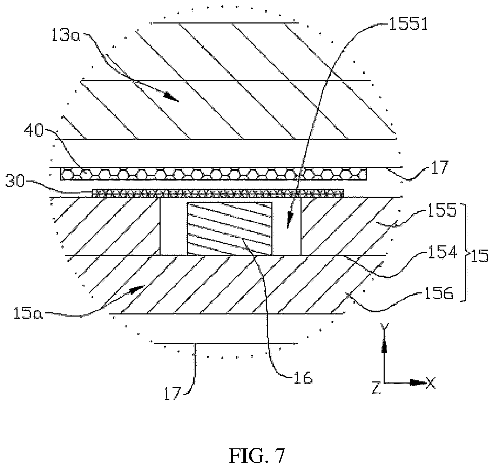

As shown in FIGs. 1 and 7, in some embodiments, the electrode assembly 10 further includes a second electrode plate 15 and a second tab 16. The second tab 16 is electrically connected to the second electrode plate 15. The first electrode plate 13 is a positive electrode plate, and the second electrode plate 15 is a negative electrode plate. The second tab 16 is located in the straight region 11. When viewed in the second direction Y, the second tab 16 and the first winding terminating section 131 do not overlap.

The second tab 16 is electrically connected to the second electrode plate 15. Along the extension direction Z of the winding axis, the second tab 16 protrudes from an end of the second electrode plate 15 to facilitate the output of electrical energy from the battery cell 100 or input of electrical energy to the battery cell 100. The second tab 16 may be connected to an end of the second electrode plate 15 in the extension direction Z of the winding axis, so that the second tab 16 protrudes from the second electrode plate 15 along the extension direction Z of the winding axis. The second tab 16 may alternatively be connected to a side of the second electrode plate 15 in a thickness direction M. When viewed in the second direction Y, a portion of the second tab 16 overlaps with the second electrode plate 15, and another portion of the second tab 16 protrudes from an end of the second electrode plate 15 along the extension direction Z of the winding axis.

In some embodiments, the second tab 16 may alternatively be flush with a surface of the second electrode plate 15 in the second direction Y, or the surface of the second electrode plate 15 in the second direction Y exceeds the surface of the second electrode tab 16 in the second direction Y. In these two cases, the second tab 16 does not protrude from the surface of the second electrode plate 15 in the second direction Y.

In some embodiments, the second tab 16 may protrude from the surface of the second electrode plate 15 in the second direction Y. When viewed in the first direction X, the second tab 16 and the portion, connected to the second tab 16, of the first electrode plate 13 at least partially do not overlap in the second direction Y.

In some embodiments, the second electrode plate 15 includes a negative electrode current collector 154 and a first negative electrode active substance layer 155. The first negative electrode active substance layer 155 is disposed on a side of the negative electrode current collector 154 in a thickness direction M. An accommodating recess 1551 is formed on a side of the first negative electrode active substance layer 155 facing away from the negative electrode current collector 154. The accommodating recess 1551 is configured to accommodate a portion of the second tab 16.

The first negative electrode active substance layer 155 may be disposed on a side of the negative electrode current collector 154 facing the winding axis or on a side of the negative electrode current collector 154 facing away from the winding axis. As shown in FIG. 7, the first negative electrode active substance layer 155 is disposed on the side of the negative electrode current collector 154 facing away from the winding axis. The accommodating recess 1551 is recessed in a direction approaching the winding axis from the surface of the first negative electrode active substance layer 155 facing away from the negative electrode current collector 154. In the extension direction Z of the winding axis, the accommodating recess 1551 extends to at least an end of the second electrode plate 15.

Depth of the accommodating recess 1551 is less than or equal to thickness of the first negative electrode active substance layer 155. In the extension direction Z of the winding axis, a portion of the second tab 16 is accommodated in the accommodating recess 1551, and another portion of the second tab 16 extends out of the accommodating recess 1551 along the extension direction Z of the winding axis and protrudes from an end of the second electrode plate 15. The second tab 16 may extend out of the accommodating recess 1551 along the second direction Y, so that the second tab 16 protrudes from the surface of the second electrode plate 15 in the second direction Y. The second tab 16 may alternatively be entirely located in the accommodating recess 1551 in the second direction Y, where a surface of the second tab 16 facing away from the negative electrode current collector 154 may flush with the surface of the first negative electrode active substance layer 155 facing away from the negative electrode current collector 154 or the surface of the first negative electrode active substance layer 155 facing away from the negative electrode current collector 154 exceeds the surface of the second tab 16 facing away from the negative electrode current collector 154, and the second tab 16 does not protrude from the surface of the second electrode plate 15 in the second direction Y. FIG. 7 shows the case in which the second tab 16 does not extend out of the accommodating recess 1551 in the second direction Y.

The accommodating recess 1551 is formed on the side of the first negative electrode active substance layer 155 facing away from the negative electrode current collector 154, and the accommodating recess 1551 is configured to accommodate a portion of the second tab 16. Then, when viewed in the first direction Y, the first negative electrode active substance layer 155 and the negative electrode tab overlap, which can reduce the size of the electrode assembly 10 in the second direction Y, conducive to increasing the volumetric energy density of the battery cell 100.

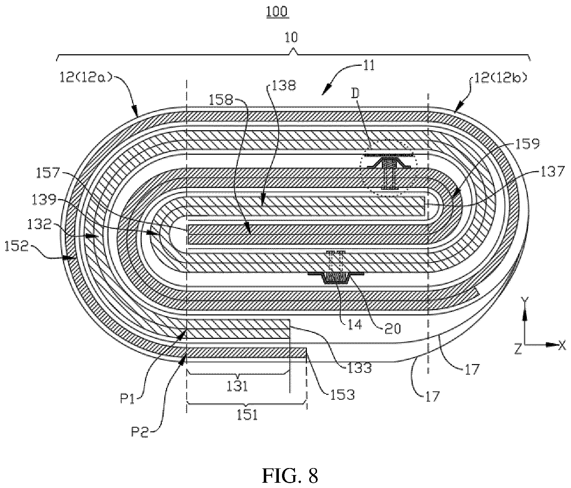

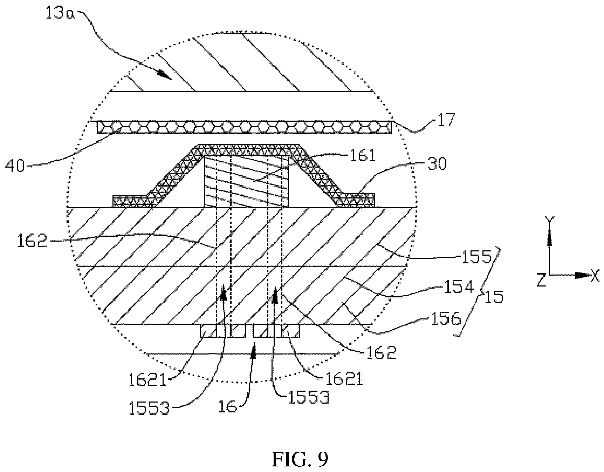

In some other embodiments, as shown in FIGs. 8 and 9, the second tab 16 may be connected to the surface of the first negative electrode active substance layer 155 facing away from the negative electrode current collector 154. The thickness of the first negative electrode active substance layer 155 overlapping with the second tab 16 in the second direction Y is the same as the thickness of the first negative electrode active substance layer 155 not overlapping with the second tab 16. The first negative electrode active substance layer 155 is provided with no accommodating recess 1551 at the position where the second tab 16 is provided. When the second electrode plate 15 is a negative electrode plate, the second tab 16 is connected to the surface of the first negative electrode active substance layer 155 facing away from the negative electrode current collector 154. This facilitates more convenient connection between the second electrode plate 15 and the second tab 16 and also eliminates the need to reserve a mounting recess on the second electrode plate 15 for mounting the second tab 16 during manufacturing of the second electrode plate 15, thereby improving the production efficiency of the second electrode plate 15 and avoiding the loss of the amount of active substance of the second electrode plate 15, conducive to increasing the energy density of the battery cell 100 and reducing the risk of lithium precipitation in the battery cell 100.

When viewed in the second direction Y, a projection of the second tab 16 does not overlap with a projection of the first winding terminating section 131.

The second tab 16 is located in the straight region 11. When viewed in the second direction Y, the second tab 16 and the first winding terminating section 131 do not overlap. Then the second tab 16 can utilize the space, in the straight region 11, on the side of the first winding terminating section 131 facing away from the first bending section 132. This can alleviate the problem of increased thickness of the electrode assembly 10 in the second direction Y at the position corresponding to the second tab 16 due to provision of the second tab 16, thereby increasing the volumetric energy density of the battery cell 100. When viewed in the second direction Y, the second tab 16 and the first winding terminating section 131 do not overlap, which can also reduce a thickness difference between the position of the electrode assembly 10 corresponding to the second tab 16 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

There are various ways to ensure that when viewed in the second direction Y, the second tab 16 and the first winding terminating section 131 do not overlap. For example, in an embodiment, the second tab 16 is connected to a side of the second electrode plate 15 in the thickness direction M, when viewed in the second direction Y, a portion of the second tab 16 overlaps with the second electrode plate 15, and another portion of the second tab 16 protrudes from an end of the second electrode plate 15 in the extension direction Z of the winding axis. In this case, a third avoidance recess (not shown in the figure) may be provided at the first winding terminating section 131. The third avoidance recess extends along the extension direction Z of the winding axis to an end of the first winding terminating section 131 to create a third notch at the end of the first winding terminating section 131 in the extension direction Z of the winding axis. A direction of the third notch is the same as the direction along which the second tab 16 protrudes from the second electrode plate 15 in the extension direction Z of the winding axis. When viewed in the second direction Y, the portion of the second tab 16 overlapping with the second electrode plate 15 is located in the third avoidance recess.

In this way, during flattening of the electrode assembly 10 in the second direction Y, the third avoidance recess can accommodate a portion of the electrode plate or second tab 16, alleviating the problem of increased size of the electrode assembly 10 in the second direction Y due to provision of the second tab 16.

In some other embodiments, as shown in FIGs. 1, 3, 5, 6, and 8, when viewed in the second direction Y, the first winding terminating section 131 is located between the first connection position P1 and the second tab 16 in the first direction X.

It can be understood that when viewed in the second direction Y, the second tab 16 is located between the connection position of the second bending region 12b and the straight region 11and the first winding terminating end 133.

When viewed in the second direction Y, the first winding terminating section 131 is located between the first connection position P1 and the second tab 16 in the first direction X. This eliminates the need to create recess or hole at the first winding terminating section 131 to avoid the second tab 16, conducive to simplifying the production process of the first electrode plate 13 and improving the production efficiency. Since there is no need to create recess or hole at the first winding terminating section 131 to avoid the second tab 16, the loss of the amount of positive electrode active substance at the first winding terminating section 131 can be avoided, conducive to increasing the energy density of the battery cell 100.

In some embodiments, when viewed in the second direction Y, the second tab 16 is located between the first electrode plate 13 and the second electrode plate 15.

In the second direction Y, the portion, provided with the second tab 16, of the second electrode plate 15 has the first electrode plate 13 provided on both sides in the second direction Y. The second tab 16 is neither arranged in the outermost ring of the second electrode plate 15 nor arranged in the innermost ring of the second electrode plate 15, but is arranged in a middle ring of the second electrode plate 15.

In the second direction Y, the second tab 16 is located between the first electrode plate 13 and the second electrode plate 15, facilitating good current flow capability of the second tab 16.

In some embodiments, the second electrode plate 15 further has a second winding starting end 157, and in the winding direction of the electrode assembly 10, length of the second electrode plate 15 is H₁, and a smallest distance between the second winding starting end 157 and the second tab 16 is H₂, satisfying H₁/4 ≤ H₂ ≤ 3H₁/4.

The second winding starting end 157 is a winding start position of the second electrode plate 15. The second electrode plate 15 further includes a second winding starting section 158 located in the straight region 11 and a fourth bending section 159 located in the bending region 12. One end of the first winding starting section 138 is connected to the fourth bending section 159, and another end of the second winding starting section 158 is the second winding starting end 157. The fourth bending section 159 is the first bending section formed through winding of the second electrode plate 15. Two sides of the negative electrode current collector 154 located at the second winding starting section 158 are respectively provided with the first negative electrode active substance layer 155 and the second negative electrode active substance layer 156. The winding starting ends of the negative electrode current collector 154, first negative electrode active substance layer 155, and second negative electrode active substance layer 156 are flush with each other and together form the second winding starting end 157 of the second electrode plate 15.

In this embodiment, the second winding starting section 158 is located in the straight region 11. When viewed in the second direction Y, a connection position of one bending region 12 and the straight region 11 overlaps with the second winding starting end 157. In this embodiment, when viewed in the second direction Y, the connection position of the first bending region 12a and the straight region 11 overlaps with the second winding starting end 157, and the connection position of the second bending region 12b and the straight region 11 overlaps with the connection position of the second winding starting section 158 and the fourth bending section 159.

In some other embodiments, when viewed in the second direction Y, the connection position of the first bending region 12a and the straight region 11 may not overlap with the second winding starting end 157.

In the first direction X, the first winding starting end 137 is disposed facing the fourth bending section 159, and the second winding starting end 157 is disposed facing the third bending section 139.

H₁ and H₂ are sizes in the winding direction and are not convenient to be shown in the figure, and therefore H₁ and H₂ are not shown in the figure. With reference to the winding direction and the positions of the second winding starting end 157 and second tab 16 shown in the figure, H₁ and H₂ are understandable.

H₁/4 ≤ H₂ ≤ 3H₁/4, so that the second tab 16 can be located in the straight region 11, and the second tab 16 can be connected to a middle ring of the second electrode plate 15, facilitating good current flow capability of the second tab 16.

In an embodiment, the second electrode plate 15 is a negative electrode plate, one end of the second winding terminating section 151 is connected to the second bending section 152, another end of the second winding terminating section 151 is the negative electrode winding terminating end of the second electrode plate 15, the second winding terminating section 151 is located on the outer side of the first winding terminating section 131, and in the winding direction of the electrode assembly 10, the second winding terminating section 151 exceeds the first winding terminating section 131. In this case, when viewed in the second direction Y, the second tab 16 and the second winding terminating section 151 do not overlap.

That is, when viewed in the second direction Y, a projection of the second tab 16 does not overlap with a projection of the second winding terminating section 151.

In the winding direction of the electrode assembly 10, the second winding terminating section 151 exceeds the first winding terminating section 131, allowing for more space on the side of the second winding terminating section 151 facing away from the second bending section 152 in the straight region 11 of the electrode assembly 10. When viewed in the second direction Y, the second tab 16 and the second winding terminating section 151 do not overlap, which can further alleviate the problem of increased thickness of the electrode assembly 10 in the second direction Y at the position corresponding to the second tab 16 due to provision of the second tab 16, thereby increasing the volumetric energy density of the battery cell 100. When viewed in the second direction Y, the second tab 16 and the second winding terminating section 151 do not overlap, which can also reduce a thickness difference between the position of the electrode assembly 10 corresponding to the second tab 16 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

There are various ways to ensure that when viewed in the second direction Y, the second tab 16 and the second winding terminating section 151 do not overlap. For example, in an embodiment, the second tab 16 is disposed on a side of the second electrode plate 15 in the thickness direction M, when viewed in the second direction Y, a portion of the second tab 16 overlaps with the second electrode plate 15, and another portion of the second tab 16 protrudes from an end of the second electrode plate 15 in the extension direction Z of the winding axis. In this case, a fourth avoidance recess (not shown in the figure) may be provided at the second winding terminating section 151. The fourth avoidance recess extends along the extension direction Z of the winding axis to an end of the second winding terminating section 151 to create a fourth notch at the end of the second winding terminating section 151 in the extension direction Z of the winding axis. A direction of the fourth notch is the same as the direction along which the second tab 16 protrudes from the second electrode plate 15 in the extension direction Z of the winding axis. When viewed in the second direction Y, the portion of the second tab 16 overlapping with the second electrode plate 15 is located in the fourth avoidance recess. In this way, during flattening of the electrode assembly 10 in the second direction Y, the fourth avoidance recess can accommodate a portion of the electrode plate or second tab 16, alleviating the problem of increased size of the electrode assembly 10 in the second direction Y due to provision of the second electrode plate 15.

As shown in FIGs. 1, 3, and 8, in some embodiments, the second winding terminating section 151 is connected to the second bending section 152 at the second connection position P2. When viewed in the second direction Y, the second winding terminating section 151 is located between the second connection position P2 and the second tab 16 in the first direction X.

It can be understood that when viewed in the second direction Y, the second tab 16 is located between the connection position of the second bending region 12b and the straight region 11 and the second winding terminating end 153.

When viewed in the second direction Y, the second winding terminating section 151 is located between the second connection position P2 and the second tab 16 in the first direction X. This eliminates the need to create recess or hole at the second winding terminating section 151 to avoid the second tab 16, conducive to simplifying the production process of the second electrode plate 15 and improving the production efficiency. Since there is no need to create recess or hole at the second winding terminating section 151 to avoid the second tab 16, the loss of the amount of negative electrode active substance at the second winding terminating section 151 can be avoided, conducive to reducing the risk of lithium precipitation in the battery cell 100 and improving the safety performance of the battery cell 100.

As shown in FIGs. 7 and 9, in some embodiments, the battery cell 100 further includes a second protection member 30. The second protection member 30 covers a surface of the second tab 16.

When viewed in the second direction Y, at least a portion of the second tab 16 overlaps with the second protection member 30. At least a portion of the second protection member 30 covers a surface of the second tab 16 facing the separator 17, so that the second protection member 30 can separate the separator 17 from the second tab 16. The second protection member 30 may be an adhesive tape that comes with adhesive, or the second protection member 30 may be a coating, for example, an insulation layer, applied to the surface of the second tab 16 facing the separator 17.

As shown in FIG. 7, in the second direction Y, the second tab 16 is entirely accommodated in the accommodating recess 1551, the surface of the first negative electrode active substance layer 155 facing away from the negative electrode current collector 154 exceeds the surface of the second tab 16 facing away from the negative electrode current collector 154. Both ends of the first protection member 20 in the first direction X are fixed to the surface of the first negative electrode active substance layer 155 facing away from the negative electrode current collector 154. In the second direction Y, a portion of a projection of the second protection member 30 is located in the accommodating recess 1551, so as to cover the notch of the accommodating recess 1551 on the surface of the first negative electrode active substance layer 155 facing away from the negative electrode current collector 154, thereby covering the surface of the second tab 16 facing away from the negative electrode current collector 154.

In some embodiments, as shown in FIG. 9, a portion of the second protection member 30 covers at least a portion of the surface of the second tab 16 facing the separator 17. In the second direction Y, the portion of the second protection member 30 overlapping with the second tab 16 may be adhered to the surface of the second tab 16 or may be in contact with the surface of the second tab 16. Two ends of the second protection member 30 in the first direction X are fixed to the first negative electrode active substance layer 155, so as to fix the second protection member 30 to the second electrode plate 15, improving the stability of the second protection member 30. The second protection layer may be adhered to the first negative electrode active substance layer 155.

In an embodiment in which the second tab 16 is connected to a side of the second electrode plate 15 in the thickness direction M, due to provision of the second tab 16, a portion of the negative electrode active substance layer at the position where the second tab 16 is disposed on the second electrode plate 15 may be covered by the second tab 16, or the second electrode plate 15 is provided with no negative electrode active substance layer at the position where the second tab 16 is located. This makes the position where the second tab 16 is disposed on the second electrode plate 15 prone to lithium precipitation.

Therefore, the second protection member 30 covers the surface of the second tab 16, reducing the risk of burrs on the surface of the second tab 16 piercing the separator 17, thereby conducive to reducing the risk of short circuit in the battery cell 100 and improving the safety performance of the battery cell 100. The second protection member 30 can also limit the movement of ions from the first electrode plate 13 to a position where the second tab 16 is disposed on the second electrode plate 15, reducing the risk of lithium precipitation and further improving the safety performance of the battery cell 100.

In some embodiments, when viewed in the second direction Y, the second protection member 30 may overlap with the first winding terminating section 131 at a portion, and another portion of the second protection member 30 does not overlap with the first winding terminating section 131.

As shown in FIG. 8, in some embodiments, when viewed in the second direction Y, the second protection member 30 and the first winding terminating section 131 do not overlap.

The first winding terminating section 131 is provided with a third avoidance recess, so that in an embodiment in which the second tab 16 and the first winding terminating section 131 do not overlap, when viewed in the second direction Y, the second protection member 30 may also be located in the third avoidance recess, ensuring that when viewed in the second direction Y, the second protection member 30 and the first winding terminating section 131 do not overlap.

Certainly, as shown in FIG. 8, in an embodiment in which the first winding terminating section 131 is located between the first connection position P1 and the second tab 16, the first winding terminating section 131 may also be located between the first connection position P1 and the second protection member 30. In other words, the second protection member 30 is located between the connection position of the second bending region 12b and the straight region 11 and the first winding terminating end 133, ensuring that when viewed in the second direction Y, the second protection member 30 and the first winding terminating section 131 do not overlap. This eliminates the need to create recess or hole at the first winding terminating section 131 to avoid the second protection member 30, and the loss of the amount of active substance at the first winding terminating section 131 can be avoided.

When viewed in the second direction Y, the second protection member 30 and the first winding terminating section 131 do not overlap. Then the second protection member 30 can utilize the space, in the straight region 11, on the side of the first winding terminating section 131 facing away from the first bending section 132. This can alleviate the problem of increased thickness of the electrode assembly 10 in the second direction Y at the position corresponding to the second protection member 30 due to provision of the second protection member 30, thereby increasing the volumetric energy density of the battery cell 100. When viewed in the second direction Y, the second protection member 30 and the first winding terminating section 131 do not overlap, which can also reduce a thickness difference between the position of the electrode assembly 10 corresponding to the second protection member 30 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

As shown in FIG. 8, in some embodiments, when viewed in the second direction Y, the second protection member 30 and the second winding terminating section 151 do not overlap.

The second winding terminating section 151 is provided with a fourth avoidance recess, so that in an embodiment in which the second tab 16 and the second winding terminating section 151 do not overlap, when viewed in the second direction Y, the second protection member 30 may also be located in the fourth avoidance recess, ensuring that when viewed in the second direction Y, the second protection member 30 and the second winding terminating section 151 do not overlap.

Certainly, as shown in FIG. 8, in an embodiment in which the second winding terminating section 151 is located between the second connection position P2 and the second tab 16, the second winding terminating section 151 may also be located between the second connection position P2 and the second protection member 30. In other words, the second protection member 30 is located between the connection position of the second bending region 12b and the straight region 11 and the second winding terminating end 153, ensuring that when viewed in the second direction Y, the second protection member 30 and the second winding terminating section 151 do not overlap. This eliminates the need to create recess or hole at the second winding terminating section 151 to avoid the second protection member 30, and the loss of the amount of active substance at the second winding terminating section 151 can be avoided.

In the winding direction of the electrode assembly 10, the second winding terminating section 151 exceeds the first winding terminating section 131, allowing for more space on the side of the second winding terminating section 151 facing away from the second bending section 152 in the straight region 11. When viewed in the second direction Y, the second protection member 30 and the second winding terminating section 151 do not overlap, which can further alleviate the problem of increased thickness of the electrode assembly 10 in the second direction Y at the position corresponding to the second protection member 30 due to provision of the second protection member 30, thereby increasing the volumetric energy density of the battery cell 100. When viewed in the second direction Y, the second protection member 30 and the second winding terminating section 151 do not overlap, which can also reduce a thickness difference between the position of the electrode assembly 10 corresponding to the second protection member 30 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

In an embodiment in which the first electrode plate 13 is a positive electrode plate and the second electrode plate 15 is a negative electrode plate, the first electrode plate 13 further includes a first straight section 13a located in the straight region 11, and the second electrode plate 15 further includes a second straight section 15a located in the straight region 11. In the second direction Y, the first straight section 13a and the second straight section 15a are adjacent to each other. The second tab 16 is disposed at the second straight section 15a and is located between the first straight section 13a and the second straight section 15a. The battery cell 100 further includes a third protection member 40 and a separator 17. The separator 17 is configured to separate the first electrode plate 13 from the second electrode plate 15. When viewed in the second direction Y, the third protection member 40 is disposed between the second tab 16 and the first straight section 13a, and at least a portion of the third protection member 40 overlaps with the second tab 16. When viewed in the second direction Y, the third protection member 40 and the first winding terminating section 131 do not overlap. The third protection member 40 may be disposed on the separator 17 between the first straight section 13a and the second straight section 15a. The third protection member 40 may also be disposed on a surface of the first straight section 13a facing the second straight section 15a. FIG. 9 shows that the third protection member 40 is disposed on a surface of the separator 17 facing the second straight section 15a.

The third protection member 40 may be an adhesive tape that comes with adhesive, or the third protection member 40 may be a coating, for example, an insulation layer, applied to the surface of the separator 17 or first straight section 13a facing the second straight section 15a.

Both ends, in the first direction X, of a projection of the third protection member 40 in the second direction Y are located in a projection of the third protection member 40 in the second direction Y. Both ends, in the first direction X, of a projection of the second tab 16 in the second direction Y are located in the projection of the third protection member 40 in the second direction Y.

When viewed in the second direction Y, a projection of the third protection member 40 does not overlap with a projection of the first winding terminating section 131. In this embodiment, the first winding terminating section 131 is located between the first connection position P1 and the third protection member 40. In other words, the third protection member 40 is located between the connection position of the second bending region 12b and the straight region 11 and the first winding terminating end 133, ensuring that when viewed in the second direction Y, the third protection member 40 and the second winding terminating section 151 do not overlap.

Provision of the third protection member 40 can limit the movement of ions from the first straight section 13a to a position where the second tab 16 is disposed at the second straight section 15a, alleviating the risk of lithium precipitation caused by the loss of negative electrode active substance at the second straight section 15a due to provision of the second tab 16, thus further improving the safety performance of the battery cell 100. When viewed in the second direction Y, the third protection member 40 and the first winding terminating section 131 do not overlap. Then the third protection member 40 can utilize the space, in the straight region 11, on the side of the first winding terminating section 131 facing away from the first bending section 132. This can alleviate the problem of increased thickness of the electrode assembly 10 in the second direction Y at a position corresponding to the third protection member 40 due to provision of the third protection member 40, thereby increasing the volumetric energy density of the battery cell 100. When viewed in the second direction Y, the third protection member 40 and the first winding terminating section 131 do not overlap, which can also reduce a thickness difference between the position of the electrode assembly 10 corresponding to the third protection member 40 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

In some embodiments, when viewed in the second direction Y, the third protection member 40 and the second winding terminating section 151 do not overlap.

In this embodiment, the second winding terminating section 151 is located between the second connection position P2 and the third protection member 40. In other words, the third protection member 40 is located between the connection position of the second bending region 12b and the straight region 11 and the second winding terminating end 153, ensuring that when viewed in the second direction Y, the third protection member 40 and the second winding terminating section 151 do not overlap.

In the winding direction of the electrode assembly 10, the second winding terminating section 151 exceeds the first winding terminating section 131, allowing for more space on the side of the second winding terminating section 151 facing away from the second bending section 152 in the straight region 11. When viewed in the second direction Y, the third protection member 40 and the second winding terminating section 151 do not overlap, which can further alleviate the problem of increased thickness of the electrode assembly 10 in the second direction Y at the position corresponding to the third protection member 40 due to provision of the third protection member 40, thereby increasing the volumetric energy density of the battery cell 100. When viewed in the second direction Y, the third protection member 40 and the second winding terminating section 151 do not overlap, which can also reduce a thickness difference between the position of the electrode assembly 10 corresponding to the third protection member 40 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

In some other embodiments, when viewed in the second direction Y, the second protection member 30 and the first winding terminating section 131 do not overlap, and the second protection member 30 may at least partially overlap with the second winding terminating section 151 (as shown in FIGs. 5 and 6). This can also alleviate, to some extent, the problem of increased size of the electrode assembly 10 due to provision of the second protection member 30.

In some other embodiments, when viewed in the second direction Y, the third protection member 40 and the first winding terminating section 131 do not overlap, and the third protection member 40 may at least partially overlap with the second winding terminating section 151 (as shown in FIGs. 5 and 6). This can also alleviate, to some extent, the problem of increased size of the electrode assembly 10 due to provision of the third protection member 40.

As shown in FIGs. 1 and 8, in an embodiment in which the first electrode plate 13 is a positive electrode plate and the second electrode plate 15 is a negative electrode plate, when viewed in the second direction Y, the first tab 14 and the second tab 16 do not overlap.

The second tab 16 does not protrude from the surface of the second electrode plate 15 in the second direction Y, or the second tab 16 protrudes from the surface of the second electrode plate 15 in the second direction Y. In these two cases, when viewed in the second direction Y, the first tab 14 and the second tab 16 do not overlap.

Especially, in the case that the second tab 16 protrudes from the surface of the second electrode plate 15 in the second direction Y, if the first tab 14 and the second tab 16 overlap when viewed in the second direction Y, the thickness of the electrode assembly 10 at the overlapping position increases by at least the sum of the protruding sizes of the first tab 14 from the first electrode plate 13 and the second tab 16 from the second electrode plate 15. When viewed in the second direction Y, the first tab 14 and the second tab 16 do not overlap, avoiding increased size of the electrode assembly 10 in the second direction Y due to overlapping of the first tab 14 and the second tab 16, conducive to increasing the volumetric energy density of the battery cell 100.

In some embodiments, when viewed in the second direction Y, the second protection member 30 and the first protection member 20 do not overlap, avoiding increased size of the electrode assembly 10 in the second direction Y due to overlapping of the second protection member 30 and the first protection member 20 when viewed in the second direction Y, conducive to increasing the volumetric energy density of the battery cell 100.

In some embodiments, a fourth protection member 50 and the first protection member 20 do not overlap, avoiding increased size of the electrode assembly 10 in the second direction Y due to overlapping of the fourth protection member 50 and the first protection member 20 when viewed in the second direction Y, conducive to increasing the volumetric energy density of the battery cell 100.

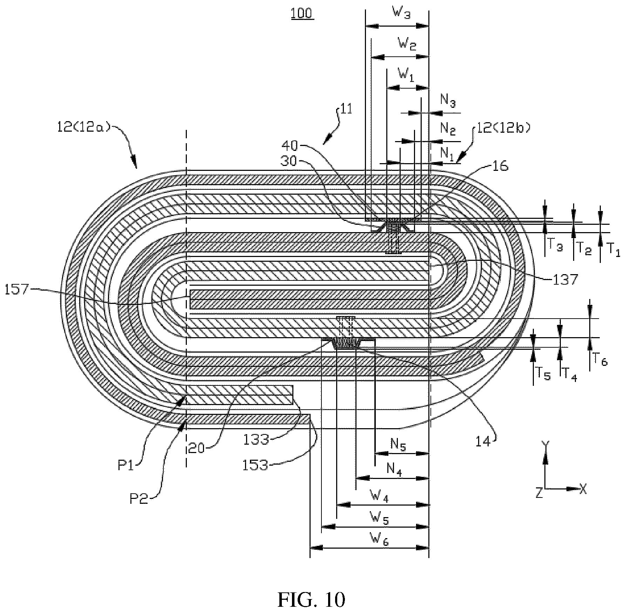

In some embodiments, as shown in FIG. 10, the first electrode plate 13 is a positive electrode plate, the second electrode plate 15 is a negative electrode plate, the second winding terminating section 151 is located on the outer side of the first winding terminating section 131, and the second winding terminating section 151 is the outermost electrode plate of the electrode assembly 10. The first winding terminating end 133, the second winding terminating end 153, and the first winding starting end 137 are all disposed facing the second bending region 12b. The second winding starting end 157 is disposed facing the first bending region 12a. In the first direction X, the first winding starting end 137 is closer to the connection position of the straight region 11 and the second bending region 12b than the second winding terminating end 153.

In some embodiments, when viewed in the second direction Y, the second protection member 30, the third protection member 40, and the second tab 16 are located between the first winding starting end 137 and the second winding terminating end 153. When viewed in the second direction Y, the second protection member 30, the third protection member 40, and the second tab 16 are located between the first winding starting end 137 and the second winding terminating end 153, and the second tab 16, the second protection member 30, and the third protection member 40 do not overlap with the first winding terminating section 131, which can also reduce the thickness differences between the positions of the electrode assembly 10 corresponding to the second tab 16, the second protection member 30, and the third protection member 40 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

In some embodiments, when viewed in the second direction Y, the first protection member 20 and the first tab 14 are located between the first winding starting end 137 and the second winding terminating end 153.

When viewed in the second direction Y, the first protection member 20 and the first tab 14 are located between the first winding starting end 137 and the second winding terminating end 153, and the first tab 14 and the first protection member 20 do not overlap with the first winding terminating section 131, which can also reduce the thickness differences between the positions of the electrode assembly 10 corresponding to the first tab 14 and the first protection member 20 and other positions of the electrode assembly 10 in the straight region 11. This can alleviate the problem of possible lithium precipitation due to uneven local stresses on the electrode plate when the electrode assembly 10 is subjected to extrusion in the second direction Y, thereby conducive to improving the safety performance of the battery cell 100.

In some embodiments, in the first direction X, a largest distance between the second tab 16 and the first winding starting end 137 is W₁, and a smallest distance between the second tab 16 and the first winding starting end 137 is N₁, satisfying 2 mm ≤ W₁ - N₁ ≤ 20 mm.

W₁ - N₁ may be 2 mm, 5 mm, 7 mm, 10 mm, 12 mm, 15 mm, 17 mm, 20 mm, or the like.

If W₁ - N₁ ≤ 2 mm, the second tab 16 is small in size, featuring weak current flow capability; and if W₁ - N₁ > 20 mm, the second tab 16 is excessively large in size, so that the second tab 16 occupies too much space in the first direction X, requiring larger distance between the first winding starting end 137 and the second winding terminating end 153 in the first direction X to ensure that the second tab 16 and the second winding terminating section 151 do not overlap when viewed in the second direction Y, not facilitating high energy density of the battery cell 100. Therefore, 2 mm ≤ W₁ - N₁ ≤ 20 mm, which ensures good current flow capability of the second tab 16 and small distance between the first winding starting end 137 and the second winding terminating end 153 in the first direction X, facilitating high energy density of the battery cell 100. In some embodiments, in the first direction X, a largest distance between the second protection member 30 and the first winding starting end 137 is W₂, and a smallest distance between the second protection member 30 and the first winding starting end 137 is N₂, satisfying 3 mm ≤ W₂ - N₂ ≤ 23 mm.

W₂ - N₂ may be 3 mm, 5 mm, 7 mm, 10 mm, 12 mm, 15 mm, 17 mm, 20 mm, 23 mm, or the like.

If W₂ - N₂ < 3 mm, the second protection member 30 is excessively small in size, with small coverage area for the second tab 16, making it difficult to reduce the risk of burrs on the surface of the second tab 16 piercing the separator 17; and if W₂ - N₂ > 23 mm, the second protection member 30 is excessively large in size, so that the second protection member 30 occupies too much space in the first direction X, requiring larger distance between the first winding starting end 137 and the second winding terminating end 153 in the first direction X to ensure that the second protection member 30 and the second winding terminating section 151 do not overlap when viewed in the second direction Y, not facilitating high energy density of the battery cell 100. Therefore, 3 mm ≤ W₂ - N₂ ≤ 23 mm, which ensures large coverage area for the second tab 16 by the second protection member 30, reducing the risk of burrs on the surface of the second tab 16 piercing the separator 17, and ensures small distance between the first winding starting end 137 and the second winding terminating end 153 in the first direction X, facilitating high energy density of the battery cell 100.

In some embodiments, in the first direction X, a largest distance between the third protection member 40 and the first winding starting end 137 is W₃, and a smallest distance between the third protection member 40 and the first winding starting end 137 is N₃, satisfying 4 mm ≤ W₃ - N₃ ≤ 25 mm.

W₃ - N₃ may be 4 mm, 5 mm, 7 mm, 10 mm, 12 mm, 15 mm, 17 mm, 20 mm, 23 mm, 25 mm, or the like.

If W₃ - N₃ < 4 mm, the third protection member 40 is excessively small in size, with limited capability of blocking the movement of ions from the first electrode plate 13 to the second electrode plate 15 covered by the second protection member 30, making it difficult to reduce the risk of lithium precipitation in the battery cell 100; and if W₃ - N₃ > 25 mm, the third protection member 40 is excessively large in size, so that the third protection member 40 occupies too much space in the first direction X, requiring larger distance between the first winding starting end 137 and the second winding terminating end 153 in the first direction X to ensure that the third protection member 40 and the second winding terminating section 151 do not overlap when viewed in the second direction Y, not facilitating high energy density of the battery cell 100. Therefore, 4 mm ≤ W₃ - N₃ ≤ 25 mm, which ensures large coverage area by the third protection member 40, effectively blocking the movement of ions from the first electrode plate 13 to the second electrode plate 15 covered by the second protection member 30 and reducing the risk of lithium precipitation in the battery cell 100, and ensures small distance between the first winding starting end 137 and the second winding terminating end 153 in the first direction X, facilitating high energy density of the battery cell 100.

In some embodiments, N₁ > N₂ > N₃ > 0.5 mm.

That N₁ > N₂ > N₃ ensures that the second protection member 30 can cover the side of the first tab 14 closest to the first winding starting end 137, and the third protection member 40 can cover the side of the second protection member 30 closest to the first winding starting end 137. This helps the second protection member 30 to completely cover the second tab 16 in the first direction X, reducing the risk of burrs on the surface of the second tab 16 piercing the separator 17, and helps the third protection member 40 to have large coverage area, effectively blocking the movement of ions from the first electrode plate 13 to the second electrode plate 15 covered by the second protection member 30, reducing the risk of lithium precipitation in the battery cell 100, and improving the safety of the battery cell 100. That 0.5 mm < N₃ facilitates fixation of the third protection member 40.

In some embodiments, that (W₃ - N₃) > (W₂ - N₂) > (W₁ - N₁) helps the second protection member 30 to completely cover the second tab 16 in the first direction X, further reducing the risk of burrs on the surface of the second tab 16 piercing the separator 17, and improving the safety of the battery cell 100. This also helps the third protection member 40 to completely cover the second protection member 30 in the first direction X, effectively blocking the movement of ions from the first electrode plate 13 to the second electrode plate 15 covered by the second protection member 30, reducing the risk of lithium precipitation in the battery cell 100, and improving the safety of the battery cell 100.

In some embodiments, in the first direction X, a largest distance between the first tab 14 and the first winding starting end 137 is W₄, and a smallest distance between the first tab 14 and the first winding starting end 137 is N₄, satisfying 2 mm ≤ W₄ - N₄ ≤ 20 mm.

W₄ - N₄ may be 2 mm, 5 mm, 7 mm, 10 mm, 12 mm, 15 mm, 17 mm, 20 mm, or the like.

If W₄ - N₄ ≤ 2 mm, the first tab 14 is small in size, featuring weak current flow capability; and if W₄ - N₄ > 20 mm, the first tab 14 is excessively large in size, so that the first tab 14 occupies too much space in the first direction X, requiring larger distance between the first winding starting end 137 and the second winding terminating end 153 in the first direction X to ensure that the first tab 14 and the second winding terminating section 151 do not overlap when viewed in the second direction Y, not facilitating high energy density of the battery cell 100. Therefore, 2 mm ≤ W₄ - N₄ ≤ 20 mm, which ensures good current flow capability of the first tab 14 and small distance between the first winding starting end 137 and the second winding terminating end 153 in the first direction X, facilitating high energy density of the battery cell 100.

In some embodiments, in the first direction X, a largest distance between the first protection member 20 and the first winding starting end 137 is W₅, and a smallest distance between the first protection member 20 and the first winding starting end 137 is N₅, satisfying 3 mm ≤ W₅ - N₅ ≤ 23 mm.

W₅ - N₅ may be 3 mm, 5 mm, 7 mm, 10 mm, 12 mm, 15 mm, 17 mm, 20 mm, 23 mm, or the like.

If W₅ - N₅ < 3 mm, the first protection member 20 is excessively small in size, with small coverage area for the first tab 14, making it difficult to reduce the risk of burrs on the surface of the first tab 14 piercing the separator 17; and if W₅ - N₅ > 23 mm, the first protection member 20 is excessively large in size, so that the first protection member 20 occupies too much space in the first direction X, requiring larger distance between the first winding starting end 137 and the second winding terminating end 153 in the first direction X to ensure that the first protection member 20 and the second winding terminating section 151 do not overlap when viewed in the second direction Y, not facilitating high energy density of the battery cell 100. Therefore, 3 mm ≤ W₅ - N₅ ≤ 23 mm, which ensures large coverage area for the first tab 14 by the first protection member 20, reducing the risk of burrs on the surface of the first tab 14 piercing the separator 17, and ensures small distance between the first winding starting end 137 and the second winding terminating end 153 in the first direction X, facilitating high energy density of the battery cell 100.

In some embodiments, 0.5 mm < N₅ < N₄.

That N₅ < N₄ ensures that the first protection member 20 can cover a side of the first tab 14 closest to the first winding starting end 137. This helps the first protection member 20 to completely cover the first tab 14 in the first direction X, reducing the risk of burrs on the surface of the first tab 14 piercing the separator 17, and improving the safety of the battery cell 100. That 0.5 mm < N₅ facilitates fixation of the first protection member to the first electrode plate 13.

In some embodiments, (W₅ - N₅) > (W₄ - N₄), so that the first protection member 20 can completely cover the first tab 14 in the first direction X, further reducing the risk of burrs on the surface of the first tab 14 piercing the separator 17, and improving the safety of the battery cell 100. In the first direction X, the largest distance between the second tab 16 and the first winding starting end 137 is W₁, the largest distance between the second protection member 30 and the first winding starting end 137 is W₂, and the largest distance between the third protection member 40 and the first winding starting end 137 is W₃, satisfying W₃ > W₂ > W₁. In the first direction X, the smallest distance between the second tab 16 and the first winding starting end 137 is N₁, the smallest distance between the second protection member 30 and the first winding starting end 137 is N₂, and the smallest distance between the third protection member 40 and the first winding starting end 137 is N₃, satisfying N₃ < N₂ < N₁. This ensures that the second protection member 30 can completely cover the second tab 16 in the first direction X, and the third protection member 40 can completely cover the second protection member 30 in the first direction X.

In the first direction X, the largest distance between the first tab 14 and the first winding starting end 137 is W₄, and the largest distance between the first protection member 20 and the first winding starting end 137 is W₅, satisfying W₅ > W₄. In the first direction X, the smallest distance between the first tab 14 and the first winding starting end 137 is N₄, and the smallest distance between the first protection member 20 and the first winding starting end 137 is N₅, satisfying N₅ < N₄. This ensures that the first protection member 20 completely covers the first tab 14 in the first direction X.

In the first direction X, the distance between the second winding terminating end 153 and the first winding terminating end 133 is W₆, satisfying W₆ - W₄ ≥ 0. When viewed in the second direction Y, the first tab 14 is located between the second winding terminating end 153 and the first winding starting end 137, and the first tab 14 and the second winding terminating section 151 do not overlap. Further, W₆ - W₅ % 0. When viewed in the second direction Y, the first protection member 20 is located between the second winding terminating end 153 and the first winding terminating end 133, and the first protection member 20 and the second winding terminating section 151 do not overlap.

In the second direction Y, protruding size of the second tab 16 from the second electrode plate 15 is T₁. In some embodiments, 0.05 mm ≤ T₁ ≤ 0.3 mm, for example, T₁ may be 0.05 mm, 0.1 mm, 0.15 mm, 0.2 mm, 0.25 mm, or 0.3 mm.

Thickness of the second protection member 30 is T₂. In some embodiments, 0.008 mm ≤ T₂ ≤ 0.08 mm, for example, T₂ may be 0.008 mm, 0.01 mm, 0.015 mm, 0.02 mm, 0.025 mm, 0.03 mm, 0.04 mm, 0.05 mm, 0.06 mm, 0.07 mm, or 0.08 mm.

Thickness of the third protection member 40 is T₃. In some embodiments, 0.008 mm ≤ T₃ ≤ 0.08 mm, for example, T₃ may be 0.008 mm, 0.01 mm, 0.015 mm, 0.02 mm, 0.025 mm, 0.03 mm, 0.04 mm, 0.05 mm, 0.06 mm, 0.07 mm, or 0.08 mm. Protruding size of the first tab 14 from the first electrode plate 13 is T₄. In some embodiments, 0.05 mm ≤ T₄ ≤ 0.3 mm, for example, T₄ may be 0.05 mm, 0.1 mm, 0.15 mm, 0.2 mm, 0.25 mm, or 0.3 mm.

Thickness of the first protection member 20 is T₅. In some embodiments, 0.008 mm ≤ T₅ ≤ 0.08 mm, for example, T₅ may be 0.008 mm, 0.01 mm, 0.015 mm, 0.02 mm, 0.025 mm, 0.03 mm, 0.04 mm, 0.05 mm, 0.06 mm, 0.07 mm, or 0.08 mm.

Thickness of the first electrode plate 13 is T₆. In some embodiments, 0.06 mm ≤ T₆ ≤ 0.25 mm, for example, T₆ may be 0.06 mm, 0.1 mm, 0.12 mm, 0.15 mm, 0.2 mm, or 0.25 mm.

If T₁ + T₂ + T₃ ≥ T₄ + T₅, W₆ - W₄ ≥ 0, and W₆ - W₁ % 0. When viewed in the second direction Y, the first tab 14 and the second tab 16 are both located between the second winding terminating end 153 and the first winding starting end 137, and neither the first tab 14 nor the second tab 16 overlaps with the second winding terminating section 151. Further, W₆ - W₅ % 0, and W₆ - W₃ % 0. When viewed in the second direction Y, the first protection member 20 and the third protection member 40 are both located between the second winding terminating end 153 and the first winding starting end 137, and neither the first protection member 20 nor the third protection member 40 overlaps with the second winding terminating section 151.

If T₁ + T₂ + T₃ < T₆ < T₄ + T₅, W₆ - W₄ % 0, and W₆ - W₅ % 0. The second electrode plate 15 is provided with an accommodating recess 1551 for accommodating the second tab 16. When viewed in the second direction Y, the first winding terminating section 131 and the first tab 14 may not overlap or may partially overlap. Further, W₆ < W₁. The first winding terminating section 131 and the second tab 16 may not overlap or may partially overlap. Further, W₁ > W₆ ≥ W₄.

For example, in an embodiment in which the second electrode plate 15 is provided with an accommodating recess 1551, T₁ may be 20 µm, T₂ may be 10 µm, T₃ may be 10 µm, W₁ may be 35 mm, W₂ may be 36 mm, W₃ may be 37 mm, W₅ may be 13 mm, T₄ may be 100 µm, T₅ may be 10 µm, T₆ may be 90 µm, and W₆ may be 25 mm. This means that the second electrode plate 15 is provided with the accommodating recess 1551 at the position of the second tab 16, and the sum of the protruding height of the second tab 16 from the second electrode plate 15, the thickness of the second protection member 30, and the thickness of the third protection member 40 is less than the thickness of the first electrode plate 13. When viewed in the second direction Y, the first tab 14 is disposed between the first winding terminating end 133 and the first winding starting end 137, and the second tab 16 may be disposed outside the first winding terminating end 133 and the first winding starting end 137.

Unlike the above example, W₆ may be 23.5 mm. This means that when viewed in the second direction Y, the second tab 16, the second protection member 30, the third protection member 40, and the first tab 14 are all disposed between the first winding terminating end 133 and the first winding starting end 137, and a portion of the first protection member 20 is located outside a distance defined by the first winding terminating end 133 and the first winding starting end 137.

For example, in an embodiment in which the second electrode plate 15 is provided with an accommodating recess 1551, T₁ may be 10 µm, T₂ may be 15 µm, T₃ may be 15 µm, W₁ may be 25 mm, W₂ may be 26 mm, W₃ may be 27 mm, W₄ may be 12 mm, W₅ may be 13 mm, T₄ may be 90 µm, T₅ may be 15 µm, T₆ may be 100 µm, and W₆ may be 27.5 mm. This means that the second electrode plate 15 is provided with the accommodating recess 1551 at the position of the second tab 16, and the sum of the protruding height of the second tab 16 from the second electrode plate 15, the thickness of the second protection member 30, and the thickness of the third protection member 40 is less than the thickness of the first electrode plate 13. When viewed in the second direction Y, the first tab 14 and the second tab 16 are both disposed between the second winding terminating end 153 and the first winding starting end 137.

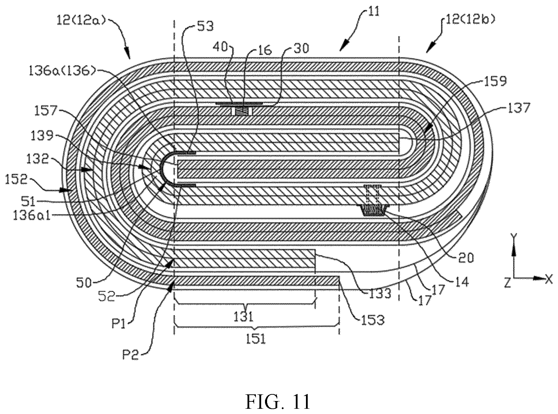

As shown in FIG. 11, in some embodiments, the first electrode plate 13 is a positive electrode plate, and the bending region 12 includes a first bending region 12a. In the first direction X, the first bending region 12a is connected to an end of the straight region 11. The positive electrode plate has a positive electrode current collector 134 and an inner-side positive electrode active substance layer 136a disposed on a side of the positive electrode current collector 134 facing the winding axis of the electrode assembly 10. The inner-side positive electrode active substance layer 136a includes multiple positive electrode bending regions located in the first bending region 12a and arranged sequentially from inside to outside. The innermost positive electrode bending portion in the first bending region 12a is a first positive electrode active substance portion 136a1. The electrode assembly 10 further includes a second electrode plate 15, where the second electrode plate 15 is a negative electrode plate, and the second electrode plate 15 has a second winding starting end 157. The first positive electrode active substance portion 136a1 is disposed facing the second winding starting end 157. The battery cell 100 further includes a fourth protection member 50, and at least a portion of the fourth protection member 50 is located between the first positive electrode active substance portion 136a1 and the second winding starting end 157. The inner-side positive electrode active substance layer 136a may be the foregoing second positive electrode active substance layer 136. The first positive electrode active substance portion 136a1 is a positive electrode active substance on a side, facing the winding axis, of the positive electrode current collector 134 at the third bending section 139. The fourth protection member 50 is fixed to the first positive electrode active substance layer 135.

The fourth protection member 50 includes a first section 51, a second section 52, and a third section 53, and the first section 51 is fixed to the first positive electrode active substance portion 136a1. The second section 52 is connected to one end of the first section 51, and the second section 52 is located in the straight region 11. The third section 53 is connected to another end of the first section 51, and the third section 53 is located in the straight region 11. This facilitates the fixation of the fourth protection member 50 and ensures that the fourth protection member 50 has larger coverage area, reducing the risk of lithium precipitation at the second winding starting end 157, increasing the connection area between the fourth protection member 50 and the first positive electrode active substance layer 135, and improving the connection stability. The first section 51 is located between the first positive electrode active substance portion 136a1 and the second winding starting end 157. The first section 51 is located in the first bending region 12a. The second section 52 and the third section 53 are respectively located on two sides of the second winding starting section 158 in the second direction Y. When viewed in the second direction Y, both the second section 52 and the third section 53 overlap with the second winding starting section 158.

The first positive electrode active substance portion 136a1 is disposed facing the second winding starting end 157. The fourth protection member 50 is provided between the first positive electrode active substance portion 136a1 and the second winding starting end 157, so that the fourth protection member 50 can limit the movement of ions from the first positive electrode active substance portion 136a1 to the second winding starting end 157, reducing the risk of lithium precipitation at positions of the electrode assembly 10 corresponding to the first positive electrode active substance portion 136a1 and the second winding starting end 157, thereby conducive to improving the safety of the battery cell 100.

In some embodiments, the first electrode plate 13 is a positive electrode plate, the first tab 14 is a positive electrode tab, and the first tab 14 is riveted to the first electrode plate 13; and the electrode assembly 10 further includes a second electrode plate 15 and a second tab 16, where the second electrode plate 15 is a negative electrode plate, the second tab 16 is a negative electrode tab, and the second tab 16 is riveted to the second electrode plate 15.

It is possible that the positive electrode tab (first tab 14) is riveted to the positive electrode plate (first electrode plate 13) to implement electrical connection between the positive electrode tab (first tab 14) and the positive electrode plate (first electrode plate 13), while the negative electrode tab (second tab 16) and the negative electrode plate (second electrode plate 15) are electrically connected in other manners, such as connection through welding or conductive adhesive. It is also possible that the negative electrode tab (second tab 16) is riveted to the negative electrode plate (second electrode plate 15) to implement electrical connection between the negative electrode tab (second tab 16) and the negative electrode plate (second electrode plate 15), while the positive electrode tab (first tab 14) and the positive electrode plate (first electrode plate 13) are electrically connected in other manners, such as connection through welding or conductive adhesive. It is possible that the positive electrode tab (first tab 14) is riveted to the positive electrode plate (first electrode plate 13), and the negative electrode tab (second tab 16) is also riveted to the negative electrode plate (second electrode plate 15).

The positive electrode tab being riveted to the positive electrode plate is conducive to improving the stability of the electrical connection between the positive electrode tab and the positive electrode plate. The negative electrode tab being riveted to the negative electrode plate is conducive to improving the stability of the electrical connection between the negative electrode tab and the negative electrode plate.

In an embodiment in which the first tab 14 is riveted to the first electrode plate 13, there are various ways to implement riveting between the first tab 14 and the first electrode plate 13. As shown in FIGs. 10 to 22, in some embodiments, the first electrode plate 13 includes a positive electrode current collector 134. The positive electrode active substance layer on a side of the positive electrode current collector 134 is the first positive electrode active substance layer 135. When viewed in the thickness direction M of the first electrode plate 13, the first positive electrode active substance layer 135 has a first region 1352 located between the first tab 14 and the positive electrode current collector 134. The first tab 14 is riveted to the first electrode plate 13 in the first region 1352.

The first region 1352 is stacked between the first tab 14 and the positive electrode current collector 134 in the thickness direction M of the first electrode plate 13.

The first positive electrode active substance layer 135 is disposed on a side of the positive electrode current collector 134. The first tab 14 is at least partially disposed on a side of the first positive electrode active substance layer 135 facing away from the positive electrode current collector 134. When viewed in the thickness direction M of the first electrode plate 13, the first tab 14, the first positive electrode active substance layer 135, and the positive electrode current collector 134 are sequentially stacked. The first region 1352 of the first positive electrode active substance layer 135 is located between the first tab 14 and the positive electrode current collector 134. The first tab 14 is riveted to the first electrode plate 13 in the first region 1352, requiring a structure to pass through the first region 1352 to implement electrical connection between the first tab 14 and the positive electrode current collector 134, thereby implementing electrical connection between the first tab 14 and the first electrode plate 13.

The positive electrode current collector 134 may be provided with the positive electrode active substance layer on only one side, while the other side of the positive electrode current collector 134 is provided with no positive electrode active substance layer. In some other embodiments, the positive electrode current collector 134 is provided with the positive electrode active substance layer on both sides and defined as the second positive electrode active substance layer 136. The first positive electrode active substance layer 135 and the second positive electrode active substance layer 136 are respectively disposed on opposite sides of the positive electrode current collector 134. The first positive electrode active substance layer 135 of the first electrode plate 13 has a first region 1352 located between the first tab 14 and the positive electrode current collector 134, and the first tab 14 is riveted to the first electrode plate 13 in the first region 1352, eliminating the need to process a mounting recess on the first positive electrode active substance layer 135 after coating is finished or to reserve a position of a mounting recess on the positive electrode current collector 134 using an adhesive tape before coating. This can improve the production efficiency and reduce production costs, thereby improving the production efficiency and reducing costs.

As shown in FIGs. 1, 2, and 12 to 23, the first electrode plate 13 is provided with a first through hole 1353 that penetrates both sides of the first electrode plate 13 in the thickness direction M. When viewed in the thickness direction M of the first electrode plate 13, the first through hole 1353 is located in the first region 1352. The first tab 14 has a first body portion 141 and a first rivet portion 142. The first region 1352 has a first surface 1354 facing away from the positive electrode current collector 134. The first electrode plate 13 has a second surface 1355 opposite the first surface 1354. The first body portion 141 is disposed on the first surface 1354. The first rivet portion 142 protrudes from the first body portion 141 and passes through the first through hole 1353. An end of the first rivet portion 142 away from the first body portion 141 is pressed against the second surface 1355.

In FIG. 2, the first rivet portion 142 is represented by dashed lines. The first tab 14 may include multiple first rivet portions 142, so that multiple riveting positions are formed between the first tab 14 and the first electrode plate 13 in the first region 1352, thereby improving the connection stability between the first electrode plate 13 and the first tab 14, increasing the contact area between the first tab 14 and the positive electrode current collector 134, and improving the current flow capability.

The surface of the first region 1352 facing away from the positive electrode current collector 134 is the first surface 1354. The first body portion 141 of the first tab 14 is attached to the first surface 1354. The first surface 1354 is a portion of the surface of the first positive electrode active substance layer 135 facing away from the positive electrode current collector 134. In an embodiment, a first mounting recess 1351 is provided on the surface of the first positive electrode active substance layer 135 facing away from the positive electrode current collector 134, and at least a portion of the first tab 14 is accommodated in the first mounting recess 1351. This can be understood as that the first mounting recess 1351 is provided in the first region 1352, and the first mounting recess 1351 is recessed in a direction approaching the positive electrode current collector 134 from the first surface 1354 of the first region 1352.

In an embodiment in which the positive electrode current collector 134 is provided with the first positive electrode active substance layer 135 on one side and no active substance layer on the other side, the second surface 1355 of the positive electrode plate is the surface of the positive electrode current collector 134 facing away from the first positive electrode active substance layer 135.

In an embodiment in which the positive electrode current collector 134 is provided with the first positive electrode active substance layer 135 on one side and the second positive electrode active substance layer 136 on the other side, if the first region 1352 and the second positive electrode active substance layer 136 overlap when viewed in the thickness direction M of the first electrode plate 13, the second surface 1355 of the first electrode plate 13 may be the surface of the second positive electrode active substance layer 136 facing away from the positive electrode current collector 134.

In an embodiment in which the positive electrode current collector 134 is provided with the first positive electrode active substance layer 135 on one side and the second positive electrode active substance layer 136 on the other side, if the first region 1352 and the second positive electrode active substance layer 136 do not overlap when viewed in the thickness direction M of the first electrode plate 13, the second surface 1355 of the first electrode plate 13 is the surface of the positive electrode current collector 134 facing away from the first positive electrode active substance layer 135. The first through hole 1353 penetrates the first electrode plate 13 in the thickness direction M of the first electrode plate 13. Two ends of the first through hole 1353 in its extension direction respectively extend to the first surface 1354 and the second surface 1355. A portion of the first through hole 1353 is located in the first region 1352, and a portion of the first through hole 1353 is located at the positive electrode current collector 134.

One end of the first rivet portion 142 is connected to the surface, of the first body portion 141, that is attached to the first surface 1354. The first rivet portion 142 passes through the first through hole 1353. When the first rivet portion 142 is passing through the portion, of the first through hole 1353, located at the positive electrode current collector 134, the first rivet portion 142 comes into contact with the positive electrode current collector 134, implementing electrical connection between the positive electrode tab and the positive electrode current collector 134, and thus implementing electrical connection between the first tab 14 and the first electrode plate 13. Another end of the first rivet portion 142 extends out of the first through hole 1353 and protrudes from the second surface 1355.

A first limiting portion 1421 is formed at the end, of the first rivet portion 142, that protrudes from the second surface 1355, and the first limiting portion 1421 is pressed against the second surface 1355. The first body portion 141 and the first limiting portion 1421 are respectively pressed against the first surface 1354 and the second surface 1355 in the thickness direction M of the first electrode plate 13, thereby preventing the first tab 14 from detaching from the first electrode plate 13.

The first rivet portion 142 of the first tab 14 protrudes from the first body portion 141 and passes through the first through hole 1353. The end of the first rivet portion 142 away from the first body portion 141 is pressed against the second surface 1355, not only facilitating convenient connection, but also reducing the risk of the first tab 14 detaching from the first electrode plate 13.

There are various ways to implement riveting of the first electrode plate 13 and the first tab 14. The riveting manner of the first electrode plate 13 and the first tab 14 is described using a case in which two sides of the positive electrode current collector 134 are respectively provided with the first positive electrode active substance layer 135 and the second positive electrode active substance layer 136 and the first positive electrode active substance layer 135 overlaps with the second positive electrode active substance layer 136 when viewed in the thickness direction M of the positive electrode plate as an example.

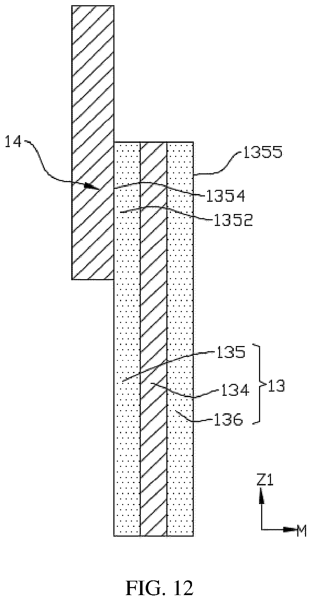

In some embodiments, as shown in FIG. 12, in the thickness direction M of the first electrode plate 13, the first tab 14 is disposed on the side of the first positive electrode active substance layer 135 facing away from the positive electrode current collector 134. When viewed in the thickness direction M of the first electrode plate 13, the first tab 14 overlaps with the first positive electrode active substance layer 135. In a width direction Z1 of the first electrode plate 13, the first tab 14 protrudes from an end of the first electrode plate 13.

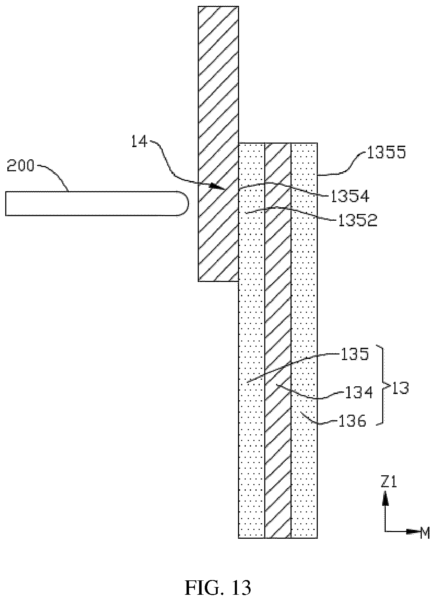

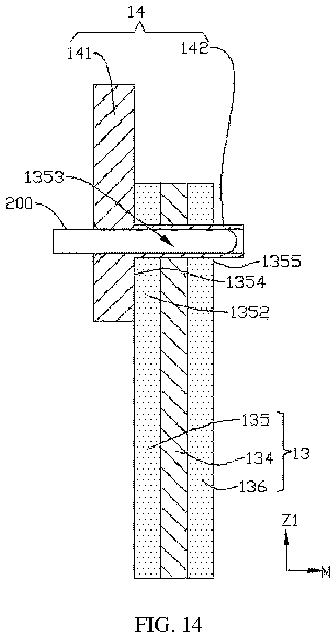

As shown in FIGs. 13 and 14, along the thickness direction M of the first electrode plate 13, a punch 200 is used to sequentially penetrates the first tab 14, the first positive electrode active substance layer 135, the positive electrode current collector 134, and the second positive electrode active substance layer 136 from the side of the positive electrode tab facing away from the first positive electrode active substance layer 135. As shown in FIG. 14, during the process of the punch 200 penetrating the first tab 14, the first tab 14 deforms and extends under the action of the punch 200 to form the first rivet portion 142. The portion of the first tab 14 located on the side of the first positive electrode active substance layer 135 facing away from the positive electrode current collector 134 is the first body portion 141. The first rivet portion 142 follows the punch 200 to sequentially penetrates the first region 1352 of the first positive electrode active substance layer 135, the positive electrode current collector 134, and the second positive electrode active substance layer 136 to create the first through hole 1353 in the first electrode plate 13. A portion of the first through hole 1353 is located in the first region 1352 of the first positive electrode active substance layer 135, a portion of the first through hole 1353 is located at the positive electrode current collector 134, and a portion of the first through hole 1353 is located at the second positive electrode active substance layer 136. The first rivet portion 142 is in contact with the positive electrode current collector 134 at the portion, of the first through hole 1353, located at the positive electrode current collector 134, thereby implementing electrical connection between the first tab 14 and the positive electrode current collector 134.

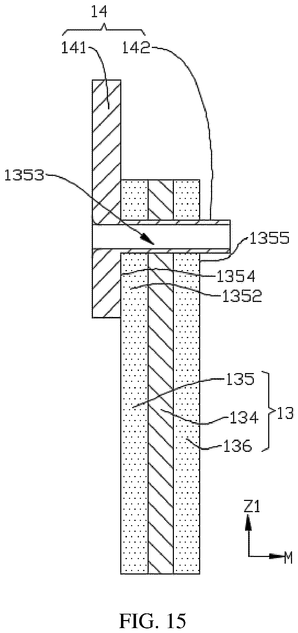

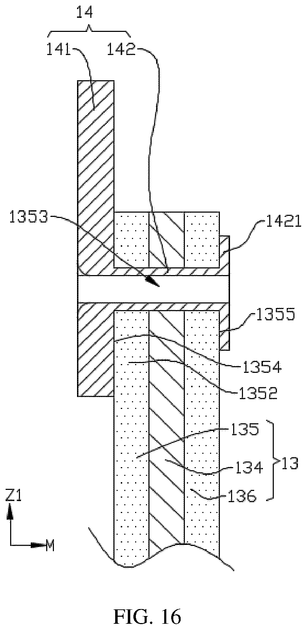

As shown in FIG. 15, the punch 200 is then withdrawn from the first through hole 1353. As shown in FIG. 16, the portion of the first rivet portion 142 extending out of the first through hole 1353 is flattened on the side of the second positive electrode active substance layer 136 facing away from the positive electrode current collector 134 to form the first limiting portion 1421. It can be understood that the first limiting portion 1421 is a folded edge formed by the end of the first rivet portion 142 extending out of the first through hole 1353. The first limiting portion 1421 and the first body portion 141 are respectively located on the side of the first positive electrode active substance layer 135 facing away from the positive electrode current collector 134 and the side of the second positive electrode active substance layer 136 facing away from the positive electrode current collector 134, so that the first tab 14 is riveted to the first electrode plate 13 in the first region 1352.

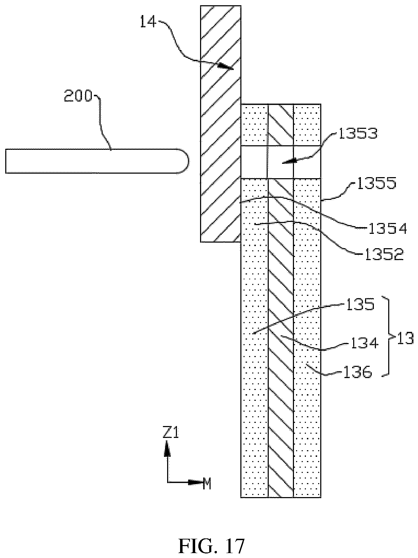

In some other embodiments, as shown in FIG. 17, the first through hole 1353 may be created in the first electrode plate 13 first, and then the first through hole 1353 sequentially penetrates the first positive electrode active substance layer 135, the positive electrode current collector 134, and the second positive electrode active substance layer 136. The first tab 14 is disposed on the side of the first positive electrode active substance layer 135 facing away from the positive electrode current collector 134. When viewed in the thickness direction M of the first electrode plate 13, the first tab 14 overlaps with the first positive electrode active substance layer 135, and the first tab 14 covers the first through hole 1353. In the width direction Z1 of the first electrode plate 13, the first tab 14 protrudes from an end of the first electrode plate 13.

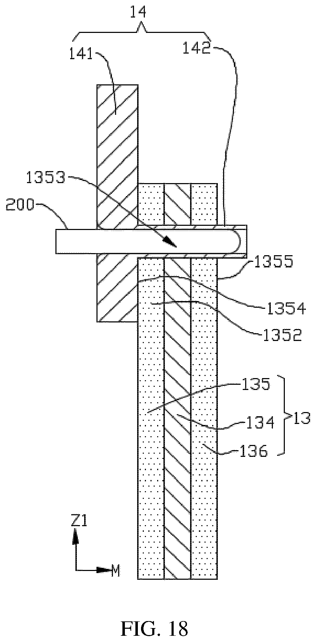

As shown in FIG. 18, in the thickness direction M of the first electrode plate 13, the punch 200 is used to sequentially penetrates the first tab 14 and the first through hole 1353 from the side of the first tab 14 facing away from the first positive electrode active substance layer 135. As shown in FIG. 18, during the process of the punch 200 penetrating the first tab 14, the first tab 14 deforms and extends under the action of the punch 200 to form the first rivet portion 142. The portion of the first tab 14 located on the side of the first positive electrode active substance layer 135 facing away from the positive electrode current collector 134 is the first body portion 141. The first rivet portion 142 follows the punch 200 to pass through the first through hole 1353. An end of the first rivet portion 142 facing away from the first body portion 141 extends out of the first through hole 1353. The first rivet portion 142 is in contact with the positive electrode current collector 134 at the portion, of the first through hole 1353, located at the positive electrode current collector 134, thereby implementing electrical connection between the first tab 14 and the positive electrode current collector 134.

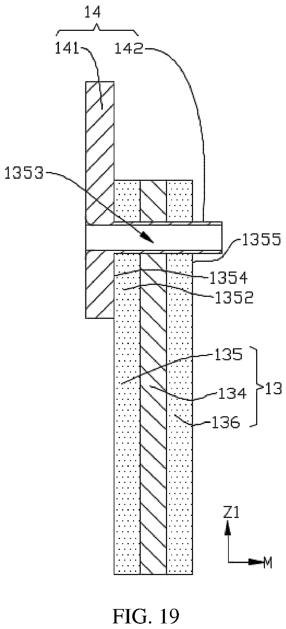

As shown in FIG. 19, the punch 200 is then withdrawn from the first through hole 1353.

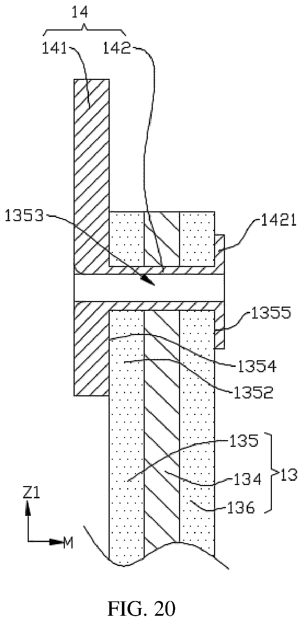

As shown in FIG. 20, the portion of the first rivet portion 142 extending out of the first through hole 1353 is flattened on the side of the second positive electrode active substance layer 136 facing away from the positive electrode current collector 134 to form the first limiting portion 1421. The first limiting portion 1421 and the first body portion 141 are respectively located on the side of the first positive electrode active substance layer 135 facing away from the positive electrode current collector 134 and the side of the second positive electrode active substance layer 136 facing away from the positive electrode current collector 134, so that the positive electrode tab is riveted to the positive electrode plate in the first region 1352.

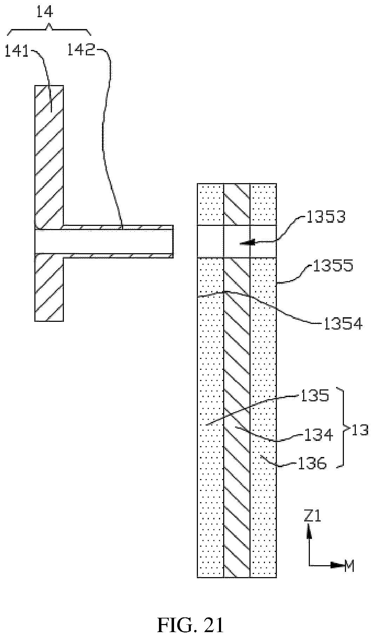

In still some other embodiments, as shown in FIG. 21, the first tab 14 includes a first body portion 141 and a first rivet portion 142 connected to the first body portion 141. The first body portion 141 and the first rivet portion 142 may be integrally formed, or may be separately formed and connected as a whole in a manner such as connection through welding or conductive adhesive. The first rivet portion 142 may be a hollow structure or a solid structure. FIG. 21 shows a case in which the first rivet portion 142 is a hollow structure.

The first electrode plate 13 is provided with the first through hole 1353, and the first through hole 1353 sequentially penetrates the first positive electrode active substance layer 135, the positive electrode current collector 134, and the second positive electrode active substance layer 136.

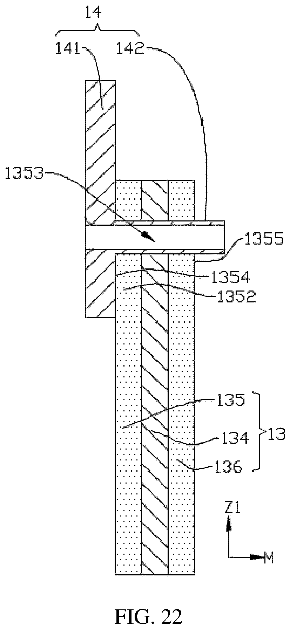

As shown in FIG. 22, the first rivet portion 142 is inserted into the first through hole 1353 from the end, of the first through hole 1353, located at the first positive electrode active substance layer 135, and extends out of the first through hole 1353 from the end, of the first through hole 1353, located at the second positive electrode active substance layer 136. The first rivet portion 142 is in contact, in the first through hole 1353, with the positive electrode current collector 134, thereby implementing electrical connection between the first tab 14 and the positive electrode current collector 134.

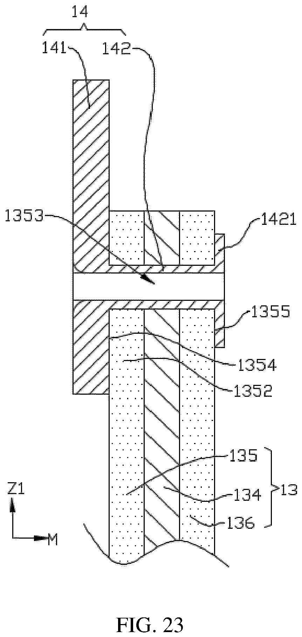

As shown in FIG. 23, the portion of the first rivet portion 142 extending out of the first through hole 1353 is flattened on the side of the second positive electrode active substance layer 136 facing away from the positive electrode current collector 134 to form the first limiting portion 1421. The first limiting portion 1421 and the first body portion 141 are respectively located on the side of the second positive electrode active substance layer 136 facing away from the positive electrode current collector 134 and the side of the first positive electrode active substance layer 135 facing away from the positive electrode current collector 134, so that the first tab 14 is riveted to the first electrode plate 13 in the first region 1352.

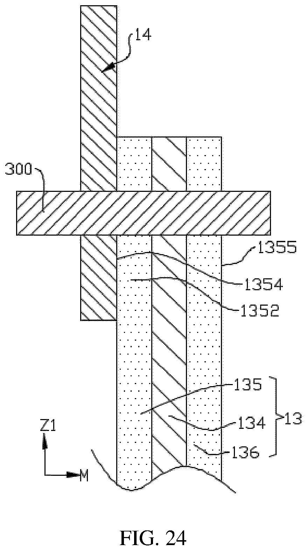

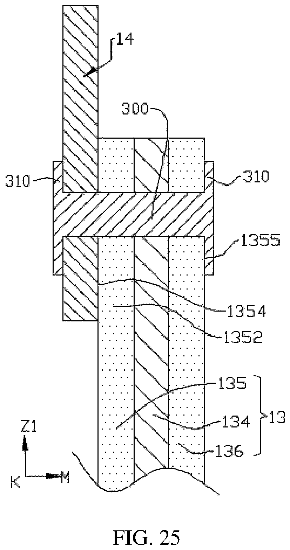

In some embodiments, the first tab 14 may be riveted to the first electrode plate 13 using a first rivet 300. As shown in FIGs. 24 and 25, the battery cell 100 further includes a first rivet 300. The first tab 14 is riveted to the first electrode plate 13 in the first region 1352 using the first rivet 300. The first rivet 300 being used to implement riveting of the first tab 14 and the first electrode plate 13 is conducive to improving the connection stability between the first tab 14 and the first electrode plate 13 and improving the current flow capability.

As shown in FIG. 25, in the thickness direction M of the first electrode plate 13, the first tab 14 is disposed on the side of the first positive electrode active substance layer 135 facing away from the positive electrode current collector 134. When viewed in the thickness direction M of the first electrode plate 13, the first tab 14 overlaps with the first positive electrode active substance layer 135. In the width direction Z1 of the first electrode plate 13, the first tab 14 protrudes from an end of the first electrode plate 13. The first rivet 300 sequentially penetrates the first tab 14 and the first electrode plate 13, and two ends of the first rivet 300 in the thickness direction M of the first electrode plate 13 respectively protrude from the first surface 1354 and the second surface 1355. The first rivet 300 is a conductor, and the first rivet 300 comes into contact with the positive electrode current collector 134 after penetrating the first electrode plate 13, thereby implementing electrical connection between the first tab 14 and the positive electrode current collector 134 through the first rivet 300.

As shown in FIG. 25, in the thickness direction M of the first electrode plate 13, two ends of the first rivet 300 are flattened. The two ends of the first rivet 300 protruding from the first surface 1354 and the second surface 1355 form two first limiting structures 310. The two first limiting structures 310 are respectively pressed against the first surface 1354 and the second surface 1355, so that the first tab 14 is riveted to the first electrode plate 13 in the first region 1352.

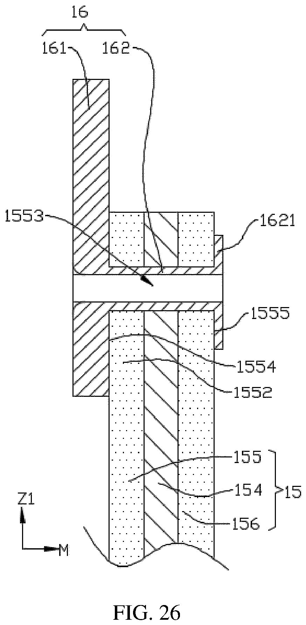

In an embodiment in which the second tab 16 is riveted to the second electrode plate 15, as shown in FIGs. 8 and 9, and FIGs. 26 and 27, the second electrode plate 15 includes a negative electrode current collector 154. The positive electrode active substance layer on a side of the negative electrode current collector 154 is the first negative electrode active substance layer 155. When viewed in the thickness direction M of the second electrode plate 15, the first negative electrode active substance layer 155 has a second region 1552 located between the second tab 16 and the negative electrode current collector 154. The second tab 16 is riveted to the second electrode plate 15 in the second region 1552.

The second region 1552 is stacked between the second tab 16 and the negative electrode current collector 154 in the thickness direction M of the second electrode plate 15.

The negative electrode current collector 154 may be provided with the negative electrode active substance layer on only one side, while the other side of the negative electrode current collector 154 is provided with no negative electrode active substance layer. In some other embodiments, the negative electrode current collector 154 is provided with the negative electrode active substance layer on both sides and defined as the second negative electrode active substance layer 156. The first negative electrode active substance layer 155 and the second negative electrode active substance layer 156 are respectively disposed on opposite sides of the negative electrode current collector 154.

The first negative electrode active substance layer 155 of the second electrode plate 15 has a second region 1552 located between the second tab 16 and the negative electrode current collector 154, and the second tab 16 is riveted to the second electrode plate 15 in the second region 1552, eliminating the need to process a mounting recess on the first negative electrode active substance layer 155 after coating is finished or to reserve a position of a mounting recess on the negative electrode current collector 154 using an adhesive tape before coating. This can improve the production efficiency and reduce production costs, thereby improving the production efficiency and reducing costs.

As shown in FIGs. 8, 9, and 26, in some embodiments, the second electrode plate 15 is provided with a second through hole 1553 that penetrates both sides of the second electrode plate 15 in the thickness direction M. When viewed in the thickness direction M of the second electrode plate 15, the second through hole 1553 is located in the second region 1552. The second tab 16 has a second body portion 161 and a second rivet portion 162. The second region 1552 has a third surface 1554 facing away from the negative electrode current collector 154. The second electrode plate 15 has a fourth surface 1555 opposite the third surface 1554. The second body portion 161 is disposed on the third surface 1554. The second rivet portion 162 protrudes from the second body portion 161 and passes through the second through hole 1553. An end of the second rivet portion 162 away from the second body portion 161 is pressed against the fourth surface 1555.

In FIG. 9, the second rivet portion 162 is represented by dashed lines. The second tab 16 may include multiple second rivet portions 162, so that multiple riveting positions are formed between the second tab 16 and the second electrode plate 15 in the second region 1552, thereby improving the connection stability between the second electrode plate 15 and the second tab 16, increasing the contact area between the second tab 16 and the negative electrode current collector 154, and improving the current flow capability.

The surface of the second region 1552 facing away from the negative electrode current collector 154 is the third surface 1554. The second body portion 161 of the second tab 16 is attached to the third surface 1554. The third surface 1554 is a portion of the surface of the first negative electrode active substance layer 155 facing away from the negative electrode current collector 154.

In an embodiment, an accommodating recess 1551 is provided on the surface of the first negative electrode active substance layer 155 facing away from the negative electrode current collector 154, and at least a portion of the second tab 16 is accommodated in the accommodating recess 1551. This can be understood as that the accommodating recess 1551 is provided in the second region 1552, and the accommodating recess 1551 is recessed in a direction approaching the negative electrode current collector 154 from the third surface 1554 of the second region 1552. In an embodiment in which the negative electrode current collector 154 is provided with the first negative electrode active substance layer 155 on one side and no active substance layer on the other side, the fourth surface 1555 of the second electrode plate 15 is the surface of the negative electrode current collector 154 facing away from the first negative electrode active substance layer 155.

In an embodiment in which the negative electrode current collector 154 is provided with the first negative electrode active substance layer 155 on one side and the second negative electrode active substance layer 156 on the other side, if the second region 1552 and the second negative electrode active substance layer 156 overlap when viewed in the thickness direction M of the second electrode plate 15, the fourth surface 1555 of the second electrode plate 15 may be the surface of the second negative electrode active substance layer 156 facing away from the negative electrode current collector 154.

In an embodiment in which the negative electrode current collector 154 is provided with the first negative electrode active substance layer 155 on one side and the second negative electrode active substance layer 156 on the other side, if the second region 1552 and the second negative electrode active substance layer 156 do not overlap when viewed in the thickness direction M of the second electrode plate 15, the fourth surface 1555 of the second electrode plate 15 is the surface of the negative electrode current collector 154 facing away from the first negative electrode active substance layer 155. The second through hole 1553 penetrates the second electrode plate 15 in the thickness direction M of the second electrode plate 15. Two ends of the second through hole 1553 in its extension direction respectively extend to the third surface 1554 and the fourth surface 1555. A portion of the second through hole 1553 is located in the second region 1552, and a portion of the second through hole 1553 is located at the negative electrode current collector 154.

One end of the second rivet portion 162 is connected to the surface, of the second body portion 161, that is attached to the third surface 1554. The second rivet portion 162 passes through the second through hole 1553. When the second rivet portion 162 is passing through the portion, of the second through hole 1553, located at the negative electrode current collector 154, the second rivet portion 162 comes into contact with the negative electrode current collector 154, implementing electrical connection between the negative electrode tab and the negative electrode current collector 154, and thus implementing electrical connection between the second tab 16 and the second electrode plate 15. Another end of the second rivet portion 162 extends out of the second through hole 1553 and protrudes from the fourth surface 1555.

A second limiting portion 1621 is formed at the end, of the second rivet portion 162, that protrudes from the fourth surface 1555, and the second limiting portion 1621 is pressed against the fourth surface 1555. The second body portion 161 and the second limiting portion 1621 are respectively pressed against the third surface 1554 and the fourth surface 1555 in the thickness direction M of the second electrode plate 15, thereby preventing the second tab 16 from detaching from the second electrode plate 15.

The second rivet portion 162 of the second tab 16 protrudes from the second body portion 161 and passes through the second through hole 1553. The end of the second rivet portion 162 away from the second body portion 161 is pressed against the fourth surface 1555, not only facilitating convenient connection, but also reducing the risk of the second tab 16 detaching from the second electrode plate 15.

There are various ways to implement riveting of the second tab 16 and the negative electrode plate. For details, refer to the riveting manners of the first tab 14 and the first electrode plate 13. Details are not further described herein.

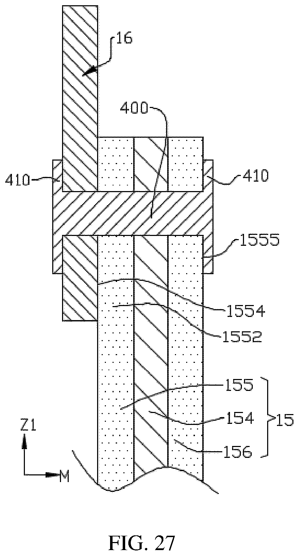

As shown in FIG. 27, in some other embodiments, the second tab 16 may be riveted to the second electrode plate 15 using a second rivet 400. The battery cell 100 further includes a second rivet 400. The second tab 16 is riveted to the second electrode plate 15 in the second region 1552 using the second rivet 400. The second rivet 400 being used to implement riveting of the second tab 16 and the second electrode plate 15 is conducive to improving the connection stability between the second tab 16 and the second electrode plate 15 and improving the current flow capability.

In the thickness direction M of the second electrode plate 15, the second tab 16 is disposed on the side of the first negative electrode active substance layer 155 facing away from the negative electrode current collector 154. When viewed in the thickness direction M of the second electrode plate 15, the second tab 16 overlaps with the first negative electrode active substance layer 155. In the width direction Z1 of the second electrode plate 15, the second tab 16 protrudes from an end of the second electrode plate 15. The second rivet 400 sequentially penetrates the second tab 16 and the second electrode plate 15, and two ends of the second rivet 400 in the thickness direction M of the second electrode plate 15 respectively protrude from the third surface 1554 and the fourth surface 1555. The second rivet 400 is a conductor, and the second rivet 400 comes into contact with the negative electrode current collector 154 after penetrating the second electrode plate 15, thereby implementing electrical connection between the second tab 16 and the negative electrode current collector 154 through the second rivet 400.

In the thickness direction M of the second electrode plate 15, two ends of the second rivet 400 are flattened. The two ends of the second rivet 400 protruding from the third surface 1554 and the fourth surface 1555 form two second limiting structures 410. The two second limiting structures 410 are respectively pressed against the third surface 1554 and the fourth surface 1555, so that the second tab 16 is riveted to the second electrode plate 15 in the second region 1552.

In an embodiment in which the second tab 16 is riveted to the second electrode plate 15 in the first region 1352, the second tab 16 may alternatively be welded to an uncoated foil region, not coated with the active substance layer, of the negative electrode current collector 154 of the second electrode plate 15, or adhered, using conductive adhesive, to the uncoated foil region, not coated with the active substance layer, of the negative electrode current collector 154 of the second electrode plate 15.

In some other embodiments, the first tab 14 may alternatively be welded to an uncoated foil region, not coated with the active substance layer, of the positive electrode current collector 134 of the first electrode plate 13, or adhered, using conductive adhesive, to the uncoated foil region, not coated with the active substance layer, of the positive electrode current collector 134 of the first electrode plate 13. An embodiment of this application further provides an electric device. The electric device includes the battery cell 100 according to any of the foregoing embodiments.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell (100), comprising:
an electrode assembly (10), wherein the electrode assembly (10) is a wound structure, the electrode assembly (10) comprises a straight region (11) and a bending region (12), and in a first direction (X), at least one end of the straight region (11) is connected to the bending region (12); and
the electrode assembly (10) comprises a first electrode plate (13) and a first tab (14), wherein the first tab (14) is electrically connected to the first electrode plate (13), the first tab (14) is located in the straight region (11), the first tab (14) at least partially protrudes from a surface of the first electrode plate (13) in a second direction (Y), the first electrode plate (13) comprises a first winding terminating section (131) located in the straight region (11) and a first bending section (132) located in the bending region (12), one end of the first winding terminating section (131) is connected to the first bending section (132), and another end of the first winding terminating section (131) is a first winding terminating end (133) of the first electrode plate (13);
wherein when viewed in the second direction (Y), the first tab (14) and the first winding terminating section (131) do not overlap, and an extension direction of a winding axis (Z) of the electrode assembly (10), the first direction (X), and the second direction (Y) are perpendicular to each other.

2. The battery cell (100) according to claim 1, wherein the first electrode plate (13) is a positive electrode plate, and the first tab (14) is a positive electrode tab;wherein the first electrode plate (13) comprises a positive electrode current collector (134) and a first positive electrode active substance layer (135), the first positive electrode active substance layer (135) is disposed on a side of the positive electrode current collector (134) in a thickness direction, and the first tab (14) is connected to a surface of the first positive electrode active substance layer (135) facing away from the positive electrode current collector (134) and is electrically connected to the positive electrode current collector (134).

3. The battery cell (100) according to claim 1, wherein the first winding terminating section (131) and the first bending section (132) are connected at a first connection position, and when viewed in the second direction (Y), the first winding terminating section (131) is located between the first connection position and the first tab (14) in the first direction (X).

4. The battery cell (100) according to claim 1, wherein the electrode assembly (10) further comprises a second electrode plate (15) with a polarity opposite to a polarity of the first electrode plate (13), and in the second direction (Y), the first tab (14) is located between the first electrode plate (13) and the second electrode plate (15).

5. The battery cell (100) according to claim 4, wherein the first electrode plate (13) further has a first winding starting end (138); and in a winding direction of the electrode assembly (10), a length of the first electrode plate (13) is Li, and a largest distance between the first winding starting end (138) and the first tab (14) is L₂, wherein L₁/4 ≤ L₂ ≤ 3L₁/4.

6. The battery cell (100) according to claim 1, wherein the first electrode plate (13) is a positive electrode plate, and the electrode assembly (10) further comprises a second electrode plate (15), wherein the second electrode plate (15) is a negative electrode plate, the second electrode plate (15) comprises a second winding terminating section (151) located in the straight region (11) and a second bending section (152) located in the bending region (12), one end of the second winding terminating section (151) is connected to the second bending section (152), another end of the second winding terminating section (151) is a second winding terminating end (153) of the second electrode plate (15), the second winding terminating section (151) is located on an outer side of the first winding terminating section (131), and in a winding direction of the electrode assembly (10), the second winding terminating section (151) exceeds the first winding terminating section (131); and
when viewed in the second direction (Y), the first tab (14) and the second winding terminating section (151) do not overlap.

7. The battery cell (100) according to claim 6, wherein the second winding terminating section (151) and the second bending section (152) are connected at a second connection position, and when viewed in the second direction (Y), the second winding terminating section (151) is located between the second connection position and the first tab (14) in the first direction (X).

8. The battery cell (100) according to claim 1, wherein the battery cell (100) further comprises a first protection member (20), and the first protection member (20) covers a surface of the first tab (14).

9. The battery cell (100) according to claim 8, wherein when viewed in the second direction (Y), the first protection member (20) and the first winding terminating section (131) do not overlap.

10. The battery cell (100) according to claim 9, wherein the electrode assembly (10) further comprises a second electrode plate (15) with a polarity opposite to a polarity of the first electrode plate (13), the first electrode plate (13) is a positive electrode plate, the second electrode plate (15) is a negative electrode plate, the second electrode plate (15) comprises a second winding terminating section (151) located in the straight region (11) and a second bending section (152) located in the bending region (12), one end of the second winding terminating section (151) is connected to the second bending section (152), another end of the second winding terminating section (151) is a second winding terminating end (153) of the second electrode plate (15), the second winding terminating section (151) is located on an outer side of the first winding terminating section (131); and in a winding direction of the electrode assembly (10), the second winding terminating section (151) exceeds the first winding terminating section (131); and
when viewed in the second direction (Y), the first protection member (20) and the second winding terminating section (151) do not overlap.

11. The battery cell (100) according to claim 10, wherein the bending region (12) comprises a first bending region (12a) and a second bending region (12b), and the first bending region (12a) and the second bending region (12b) are respectively connected to two ends of the straight region (11) in the first direction (X);
the first electrode plate (13) has a first winding starting end (138), and the second electrode plate (15) has a second winding starting end (157), wherein the first winding starting end (138), the first winding terminating end (133), and the second winding terminating end (153) are all disposed facing the second bending region (12b)bending region (12), the second winding starting end (157) is disposed facing the first bending region (12a), and the first winding starting end (138) is closer to the second bending region (12b) than the second winding terminating end (153); and
when viewed in the second direction (Y), the first protection member (20) and the first tab (14) are located between the first winding starting end (138) and the second winding terminating end (153).

12. The battery cell (100) according to claim 11, wherein a largest distance between the first tab (14) and the first winding starting end (138) is W₄, and a smallest distance between the first tab (14) and the first winding starting end (138) is N₄, wherein 2 mm ≤ W₄ - N₄ ≤ 20 mm.

13. The battery cell (100) according to claim 12, wherein in the first direction (X), a largest distance between the first protection member (20) and the first winding starting end (138) is W₅, and a smallest distance between the first protection member (20) and the first winding starting end (138) is N₅, and 3 mm ≤ W₅ - N₅ ≤ 23 mm.

14. The battery cell (100) according to claim 13, wherein 0.5 mm < N₅ < N₄.

15. The battery cell (100) according to claim 13, wherein (W₅ - N₅) > (W₄ - N₄).

16. The battery cell (100) according to any one of claims 1 to 15, wherein the electrode assembly (10) further comprises a second electrode plate (15) and a second tab (16), the second tab (16) is electrically connected to the second electrode plate (15), the first electrode plate (13) is a positive electrode plate, the second electrode plate (15) is a negative electrode plate, and the second tab (16) is located in the straight region (11); and
when viewed in the second direction (Y), the second tab (16) and the first winding terminating section (131) do not overlap.

17. The battery cell (100) according to claim 16, wherein the first winding terminating section (131) and the first bending section (132) are connected at a first connection position, and when viewed in the second direction (Y), the first winding terminating section (131) is located between the first connection position and the second tab (16) in the first direction (X).

18. The battery cell (100) according to claim 16, wherein in the second direction (Y), the second tab (16) is located between the first electrode plate (13) and the second electrode plate (15).

19. The battery cell (100) according to claim 17, wherein the second electrode plate (15) further has a second winding starting end (157), and in a winding direction of the electrode assembly (10), a length of the second electrode plate (15) is H₁, and a largest distance between the second winding starting end (157) and the second tab (16) is H₂, wherein H₁/4 ≤ H₂ ≤ 3H₁/4.

20. The battery cell (100) according to claim 16, wherein the second electrode plate (15) comprises a second winding terminating section (151) located in the straight region (11) and a second bending section (152) located in the bending region (12), one end of the second winding terminating section (151) is connected to the second bending section (152), another end of the second winding terminating section (151) is a negative electrode winding terminating end of the second electrode plate (15), the second winding terminating section (151) is located on an outer side of the first winding terminating section (131); and in a winding direction of the electrode assembly (10), the second winding terminating section (151) exceeds the first winding terminating section (131); and
when viewed in the second direction (Y), the second tab (16) and the second winding terminating section (151) do not overlap.

21. The battery cell (100) according to claim 20, wherein the second winding terminating section (151) and the second bending section (152) are connected at a second connection position, and when viewed in the second direction (Y), the second winding terminating section (151) is located between the second connection position and the second tab (16) in the first direction (X).

22. The battery cell (100) according to claim 16, wherein the battery cell (100) further comprises a second protection member, and the second protection member covers a surface of the second tab (16); whereinwhen viewed in the second direction (Y), the second protection member and the first winding terminating section (131) do not overlap.

23. The battery cell (100) according to claim 22, wherein the negative electrode plate comprises a second winding terminating section (151) located in the straight region (11), the second winding terminating section (151) is located on an outer side of the first winding terminating section (131); and in a winding direction of the electrode assembly (10), the second winding terminating section (151) exceeds the first winding terminating section (131); and
when viewed in the second direction (Y), the second protection member and the second winding terminating section (151) do not overlap.

24. The battery cell (100) according to claim 21, wherein the first electrode plate (13) further comprises a first straight section (13a) located in the straight region (11), and the second electrode plate (15) further comprises a second straight section (15a) located in the straight region (11); wherein in the second direction (Y), the first straight section (13a) and the second straight section (15a) are adjacent to each other, and the second tab (16) is disposed at the second straight section (15a) and is located between the first straight section (13a) and the second straight section (15a);
the battery cell (100) further comprises a third protection member (40) and a separator (17), wherein the separator (17) is configured to separate the first electrode plate (13) and the second electrode plate (15); and in the second direction (Y), the third protection member (40) is disposed between the second tab (16) and the first straight section (13a), and at least a portion of the third protection member (40) overlaps with the second tab (16); and
when viewed in the second direction (Y), the third protection member (40) and the first winding terminating section (131) do not overlap.

25. The battery cell (100) according to claim 24, wherein the second electrode plate (15) has a second winding terminating section (151) located in the straight region (11), the second winding terminating section (151) is located on an outer side of the first winding terminating section (131), an end of the second winding terminating section (151) forms a second winding terminating end (153) of the second electrode plate (15); and in a winding direction of the electrode assembly (10), the second winding terminating section (151) exceeds the first winding terminating section (131); and
when viewed in the second direction (Y), the third protection member (40) and the second winding terminating section (151) do not overlap.

26. The battery cell (100) according to claim 25, wherein the bending region (12) comprises a first bending region (12a)bending region (12) and a second bending region (12b)bending region (12), and the first bending region (12a) and the second bending region (12b) are respectively connected to two ends of the straight region (11) in the first direction (X);
the first electrode plate (13) has a first winding starting end (138), and the second electrode plate (15) has a second winding starting end (157), wherein the first winding starting end (138), the first winding terminating end (133), and the second winding terminating end (153) are all disposed facing the second bending region (12b), the second winding starting end (157) is disposed facing the first bending region (12a), and the first winding starting end (138) is closer to the second bending region (12b) than the second winding terminating end (153); and
when viewed in the second direction (Y), the second protection member, the third protection member (40), and the second tab (16) are located between the first winding starting end (138) and the second winding terminating end (153).

27. The battery cell (100) according to claim 15, wherein the second electrode plate (15) comprises a negative electrode current collector (154) and a first negative electrode active substance layer (155), the first negative electrode active substance layer (155) is disposed on a side of the negative electrode current collector (154) in a thickness direction,an accommodating recess is formed on a side of the first negative electrode active substance layer (155) facing away from the negative electrode current collector (154), and the accommodating recess is configured to accommodate a portion of the second tab (16).

28. The battery cell (100) according to claim 15, wherein when viewed in the second direction (Y), the first tab (14) and the second tab (16) do not overlap.

29. The battery cell (100) according to claim 1, wherein the first electrode plate (13) is a positive electrode plate, the bending region (12) comprises a first bending region (12a), in the first direction (X), the first bending region (12a) is connected to an end of the straight region (11), the positive electrode plate has a positive electrode current collector (134) and an inner-side positive electrode active substance layer, the inner-side positive electrode active substance layer is disposed on a side of the positive electrode current collector (134) facing the winding axis (Z) of the electrode assembly (10), the inner-side positive electrode active substance layer comprises multiple positive electrode bending regions (12) located in the first bending region (12a) and arranged sequentially from inside to outside, the innermost positive electrode bending portion in the first bending region (12a) is a first positive electrode active substance portion; the electrode assembly (10) further comprises a second electrode plate (15), the second electrode plate (15) is a negative electrode plate, the second electrode plate (15) has a second winding starting end (157), and the first positive electrode active substance portion is disposed facing the second winding starting end (157); and
the battery cell (100) further comprises a fourth protection member, and at least a portion of the fourth protection member is located between the first positive electrode active substance portion and the second winding starting end (157).

30. An electric device, comprising the battery cell (100) according to any one of claims 1 to 29.
